(19) Europäisches Patentamt
European Patent Office
Office européen des brevets

(11) EP 4 043 091 A1

(12) **EUROPEAN PATENT APPLICATION**

(43) Date of publication:
**17.08.2022 Bulletin 2022/33**

(21) Application number: **21156305.1**

(22) Date of filing: **10.02.2021**

(51) International Patent Classification (IPC):
***B01D 61/02*** *(2006.01)* ***B01D 67/00*** *(2006.01)*
***B01D 69/02*** *(2006.01)* ***B01D 69/12*** *(2006.01)*
***B01D 71/60*** *(2006.01)*

(52) Cooperative Patent Classification (CPC):
**B01D 61/025; B01D 61/027; B01D 67/0006; B01D 69/02; B01D 69/125; B01D 71/60;**
B01D 2325/30

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universiteit Twente**
**7522 NB Enschede (NL)**

(72) Inventors:
- **ASADI TASHVIGH, Akbar**
  **7522 NB Enschede (NL)**
- **BENES, Nieck Edwin**
  **7522 NB Enschede (NL)**

(74) Representative: **V.O.**
**P.O. Box 87930**
**2508 DH Den Haag (NL)**

(54) **INTERFACIAL POLYMERIZATION METHOD FOR PREPARING MEMBRANES**

(57) The present invention pertains to a method for interfacial polymerization for preparing membranes. The membranes of the invention are stable under extreme conditions, such as very high or very low pH, or in organic solvents. The invention also relates to the use of said membranes in water recycling and for filtering organic solvents.

EP 4 043 091 A1

## Description

FIELD OF THE INVENTION

The invention disclosed herein relates to an interfacial polymerization method for preparing membranes, and to membranes obtainable by said method, and uses of said membranes.

BACKGROUND

Freshwater shortage is one of the most disturbing issues of the current and future generations. It endangers the lives of millions of people around the globe. Additionally, generation and discharge of industrial effluents into rivers and brackish water destroy the aquatic and wildlife, impacting the human life directly. Therefore, a practical solution that can eliminate the toxic compounds in wastewater is highly desired.

Membrane-based separation technologies have proven their unique potential for the treatment of industrial wastewater as well as seawater desalination, which make them one of the sustainable solutions for the current water crisis. Among various membrane processes, nanofiltration (NF) has particularly attracted more interests, thanks to its small pore size, yet high flux. The pore size is defined in such a way that, the nonharmful monovalent salts could pass through the membranes, while micropollutants and heavy metals would be easily retained. The nanofiltration process has been successfully applied to numerous separation processes in industrial scales. However, the low stability of nanofiltration membranes remains a drawback and often hinders their application in a broader range, where the solution to be filtered can damage the membrane. This is a critical issue, since most of the effluents in chemical factories are often at extreme pH, highly corrosive, and/or contain organic solvents.

Conventional polymer nanofiltration membranes quickly lose their performance upon contact with either acidic or alkaline solutions, or with organic solvents. Hence, there is a strong need for developing highly robust materials for membrane fabrication.

Thin film composite (TFC) membranes are specifically of interest for NF processes owing to their thin selective layer and robust mechanical strength, leading to a high flux under high pressures. The selective layer in thin film composite membranes is commonly made through an interfacial polymerization (IP) process, where polymerization occurs at the interface of two immiscible solutions, that each containing a different monomer. Interfacial polymerization can be used on an industrial scale.

Thin film composite membranes with a polyamide selective layer made via interfacial polymerization between trimesoyl chloride (TMC) and a diamine are the most common form of nanofiltration membranes (Verbeke et al.. Environ. Sci. Technol. 2019, volume 53, pages 8640-8648). However, polyamide-based membranes do not perform well upon exposure to solutions with an extreme pH.

Other products and methods known in the art also have drawbacks. Ceramic membranes are extremely brittle and expensive, and non-membrane-based methods are costly and not environmentally friendly.

In one aspect, there is a need to prepare membranes that perform well upon exposure to solutions with an extreme pH and/or to organic solvents.

It is desired that said membranes can be prepared in an environmentally friendly way. Furthermore, it is desired that said membranes are not brittle, and/or are cheap and easy to produce and handle.

It is the aim of the invention to provide membranes and a method for making same that meet one or more of the abovementioned desires.

SUMMARY OF THE INVENTION

In one aspect, the present invention pertains to a method for preparing a membrane, wherein the method comprises the step of subjecting a first monomer to an interfacial polymerization reaction by contacting the first monomer with a second monomer, wherein the first monomer is dissolved in a first solvent, and the second monomer is dissolved in a second solvent, wherein the first solvent and the second solvent are immiscible, wherein the first monomer is a compound according to Formula (1):

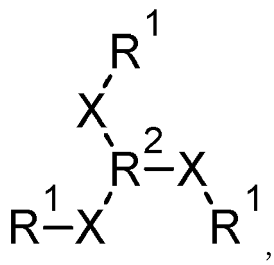

wherein each $R^1$ independently is a halogen, preferably chloride or bromide, wherein $R^2$ is selected from the group consisting of $C_{5-6}$ arenetriyl, $C_{5-6}$ heteroarenetriyl, $C_{1-8}$ alkanetriyl, and $C_{1-8}$ heteroalkanetriyl;
wherein optionally the arenetriyl, heteroarenetriyl, alkanetriyl, or heteroalkanetriyl is substituted with a substituent selected from the group consisting of $C_{1-3}$ alkyl, COOH, C(O)H, and $C_{1-3}$ alkoxy;
wherein each X independently is $C_{1-4}$ alkylene, wherein optionally the alkylene is substituted with a substituent selected from the group consisting of COOH, C(O)H, and $C_{1-3}$ alkoxy;
and wherein the second monomer comprises at least two amines.

In another aspect, the present invention relates to a membrane obtainable by the method of the invention.
In yet another aspect, the invention relates to the use of the membrane according to the invention for water recycling.
In a further aspect still, the invention pertains to the use of the membrane according to the invention for filtering organic solvents.
In yet another aspect, the invention relates to a polymer comprising a repeating unit according to Formula (5):

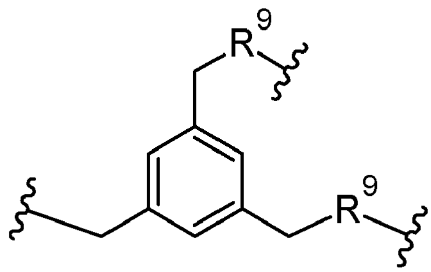

wherein each $R^9$ is individually selected from the group consisting of

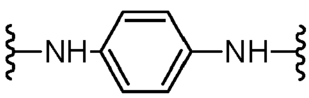 , 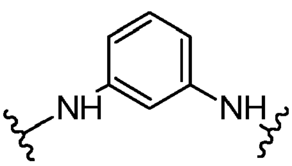 , and 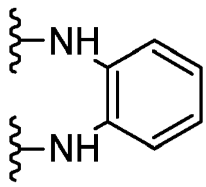 .

BRIEF DESCRIPTION OF THE FIGURES

Figure 1 depicts (a) Visualization of the interfacial polymerization between 1,3,5-tris(bromomethyl)benzene in hexane and p-phenylenediamine in water, (b) a photograph of a glass vial containing the two immiscible solutions and a thin film is formed between the two phases.

Figure 2 depicts p-phenylenediamine-1,3,5-tris(bromomethyl)benzene membranes (a) salt rejection and (b) PEG rejection.

Figure 3 depicts the morphology of the polyethersulfone support and thin film composites p-phenylenediamine-1,3,5-tris(bromomethyl)benzene membrane.

Figure 4 depicts a comparison between the FTIR spectra of the polyethersulfone support and p-phenylenediamine-1,3,5-tris(bromomethyl)benzene membrane.

Figure 5 depicts the reproducibility of the interfacial polymerization using p-phenylenediamine in water and 1,3,5-tris(bromomethyl)benzene in hexane.

Figure 6 depicts long-term pH stability tests of p-phenylenediamine-1,3,5-tris(bromomethyl)benzene membranes after prolonged treatment in (a) 0.1 M $HNO_3$ and (b) 0.1 M NaOH solutions. Water permeance on left y-axis (black), $MgCl_2$ rejection on right y-axis (grey).

Figure 7 depicts (a) salt rejection, (b) PEG rejection and (c) pore size distribution of the 1,3,5-tris(bromomethyl)benzene-p-phenylenediamine membrane before and after in-situ exposure to 0.1 M NaOH and 0.1 M HNO3.

Figure 8 depicts the morphology of the (a) pristine p-phenylenediamine-1,3,5-tris(bromomethyl)benzene membrane, (b) after 4 weeks immersion in 0.1 M NaOH, (c) after 4 weeks immersion in 0.1 M $HNO_3$.

Figure 9 depicts the water contact angle of polyethersulfone support, pristine and after prolonged immersion in 0.1 M NaOH or 0.1 M $HNO_3$ thin film composites membranes.

Figure 10 depicts a comparison between the FTIR spectra of the thin film composites membranes before and after immersion in 0.1 M NaOH or 0.1 M $HNO_3$.

Figure 11 depicts the morphology of the m-phenylenediamine-1,3,5-tris(bromomethyl)benzene membranes.

Figure 12 depicts the long-term pH stability tests of m-phenylenediamine-1,3,5-tris(bromomethyl)benzene membranes after prolonged treatment in (a) 0.1 M $HNO_3$ and (b) 0.1 M NaOH solutions. Water permeance on left y-axis (black), $MgSO_4$ rejection on right y-axis (grey).

Figure 13 depicts a solvent miscibility chart as provided by Sigma Aldrich.

DETAILED DESCRIPTION OF THE INVENTION

The invention, in a broad sense, is based on the judicious insight that one or more of the abovementioned desires is met by preparing membranes using a first monomer according to Formula (1) and a second monomer having at least two amines in an interfacial polymerization reaction. The membranes of the invention perform well upon exposure to solutions with an extreme pH and/or to organic solvents. Moreover, these membranes can be prepared in an environmentally friendly way, and on an industrial scale. Furthermore, the membranes of the invention are not brittle, and are cheap and easy to produce and handle.

Without wishing to be bound by theory, the inventors believe that the improved properties of the membranes of the invention are due to the fact that the interfacial polymerization reaction of the invention leads to stable polymer networks. By contrast, prior art membranes prepared by using trimesoyl chloride and amine-containing monomers contain amides, which are not stable under conditions of extreme pH.

Definitions

The present invention will further be described with respect to particular embodiments and with reference to certain drawings but the invention is not limited thereto but only by the claims. Where an indefinite or definite article is used when referring to a singular noun e.g. "a" or "an", "the", this includes a plural of that noun unless something else is specifically stated.

The verb "to comprise", and its conjugations, as used in this description and in the claims is used in its non-limiting sense to mean that items following the word are included, but items not specifically mentioned are not excluded.

In addition, reference to an element by the indefinite article "a" or "an" does not exclude the possibility that more than one of the element is present, unless the context clearly requires that there is one and only one of the elements. The indefinite article "a" or "an" thus usually means "at least one".

Herein, a good performance of a membrane is understood that it has at least a suitable pore size and good permeance for water and/or organic solvents.

Herein, compounds can be described to be "insoluble" in a certain solvent. As the skilled person is aware, solubility can be readily tested by contacting the compound and the solvent and visually inspecting whether the compound

dissolves. Solubility tests are preferably carried out at the temperature at which the interfacial polymerization reaction is carried out, preferably at room temperature. In preferred embodiments, "insoluble" means that less than 10 g/L of the compound dissolves in the solvent, more preferably less than 1 g/L, most preferably less than 0.1 g/L.

The compounds may occur in different tautomeric forms. The compounds according to the invention are meant to include all tautomeric forms, unless stated otherwise. When the structure of a compound is depicted as a specific tautomer, it is to be understood that the invention of the present application is not limited to that specific tautomer, unless stated otherwise.

Unless stated otherwise, the compounds of the invention and/or groups thereof may be protonated or deprotonated. It will be understood that it is possible that a compound may bear multiple charges which may be of opposite sign. For example, in a compound containing an amine and a carboxylic acid, the amine may be protonated while simultaneously the carboxylic acid is deprotonated.

In several formulae, groups or substituents are indicated with reference to letters such as "X", and various (numbered) "R" groups. In addition, the number of repeating units may be referred to with a letter, e.g. n in $-(CH_2)_n-$. The definitions of these letters are to be read with reference to each formula, i.e. in different formulae these letters, each independently, can have different meanings unless indicated otherwise.

In several chemical formulae and texts below reference is made to "alkyl", "heteroalkyl", "aryl", "heteroaryl", "alkylene", "arylene", "arenetriyl", and the like. The number of carbon atoms that these groups have, excluding the carbon atoms comprised in any optional substituents as defined below, can be indicated by a designation preceding such terms (e.g. "$C_{1-8}$ alkyl" means that said alkyl may have from 1 to 8 carbon atoms). For the avoidance of doubt, a butyl group substituted with a $-OCH_3$ group is designated as a $C_4$ alkyl, because the carbon atom in the substituent is not included in the carbon count.

Unsubstituted alkyl groups have the general formula $C_nH_{2n+1}$ and may be linear or branched. Optionally, the alkyl groups are substituted by one or more substituents further specified in this document. Preferably, the alkyl groups are not substituted. Examples of alkyl groups include methyl, ethyl, propyl, 2-propyl, t-butyl, 1-hexyl, 1-dodecyl, etc.

An aryl group refers to an aromatic hydrocarbon ring system, and may include monocyclic and polycyclic structures. When the aryl group is a polycyclic structure, it is preferably a bicyclic structure. Optionally, the aryl group may be substituted by one or more substituents further specified in this document. Examples of aryl groups are phenyl and naphthyl.

Heteroaryl groups comprise at least two carbon atoms (i.e. at least $C_2$) and one or more heteroatoms N, O, P or S. Preferably, heteroaryl groups comprise at least two carbon atoms (i.e. at least $C_2$) and one or more oxygen atoms. A heteroaryl group may have a monocyclic or a bicyclic structure. Optionally, the heteroaryl group may be substituted by one or more substituents further specified in this document. Examples of suitable heteroaryl groups include pyridinyl, quinolinyl, pyrimidinyl, pyrazinyl, pyrazolyl, imidazolyl, thiazolyl, pyrrolyl, furanyl, triazolyl, benzofuranyl, indolyl, purinyl, benzoxazolyl, thienyl, phospholyl and oxazolyl.

Herein, the prefix hetero- denotes that the group contains one or more heteroatoms selected from the group consisting of O, N, S, P, and Si. Preferably, the groups with the prefix hetero- contain one or more oxygen atoms.

Herein, the suffix -ene denotes divalent groups, i.e. that the group is linked to at least two other moieties. An example of an alkylene is propylene ($-CH_2-CH_2-CH_2-$), which is linked to another moiety at both termini.

Herein, the suffix -triyl denotes trivalent groups, i.e. that the group is linked to at least three other moieties. An example of an arenetriyl is depicted below:

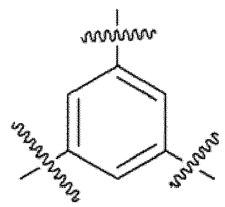

,

wherein the wiggly lines denote bonds to different groups of the main compound.

Unless stated otherwise, any group disclosed herein is understood to be linear or branched. In particular, alkyl groups, alkenyl groups, alkanetriyl groups, heteroalkanetriyl groups, and the like are linear or branched, unless stated otherwise.

The unified atomic mass unit or Dalton is herein abbreviated to Da. The skilled person is aware that Dalton is a regular unit for molecular weight and that 1 Da is equivalent to 1 g/mol (grams per mole).

It will be understood that herein, the terms "moiety" and "group" are used interchangeably when referring to a part of a molecule.

Solvents

In the method of the invention, the first solvent and the second solvent are immiscible. The skilled person is aware of which solvents are miscible and immiscible. The first and second solvents that can be used in the method of the invention are preferably selected according to the solvent miscibility chart of Figure 13.

In a preferred embodiment, the first solvent is selected from the group consisting of benzene, butanol, n-butyl acetate, carbon tetrachloride, chloroform, cyclohexane, 1,2-dichloroethane, dichloromethane, diethyl ether, diisopropyl ether, ethyl acetate, heptane, hexane, isooctane, methyl ethyl ketone, methyl tert-butyl ether, pentane, toluene, trichloroethylene, and xylene. More preferably, the first solvent is hexane or toluene, most preferably hexane.

In a preferred embodiment, the second solvent is selected from the group consisting of water, acetic acid, acetonitrile, dimethylformamide, dimethyl sulfoxide, and methanol. Most preferably, the second solvent is water.

First monomer

The first monomer used in the method of the invention is a compound according to Formula (1).

In Formula (1), each $R^1$ independently is a halogen. In a preferred embodiment, $R^1$ is chloride or bromide. Most preferably, $R^1$ is bromide.

In Formula (1), $R^2$ is selected from the group consisting of $C_{5-6}$ arenetriyl, $C_{5-6}$ heteroarenetriyl, $C_{1-8}$ alkanetriyl, and $C_{1-8}$ heteroalkanetriyl. Preferably, $R^2$ is selected from the group consisting of benzenetriyl, $C_5$ heteroarenetriyl, $C_{2-4}$ alkanetriyl, and $C_{1-3}$ heteroalkanetriyl. More preferably, $R^2$ is selected from the group consisting of benzenetriyl, and $C_{2-4}$ alkanetriyl. Most preferably, $R^2$ is benzenetriyl.

For $R^2$, preferred heteroarenetriyl groups are furantriyl and thiophenetriyl.

For $R^2$, preferred heteroalkanetriyl groups contain at most two heteroatoms selected from the group consisting of O, P, and S.

For $R^2$, optionally the arenetriyl, heteroarenetriyl, alkanetriyl, or heteroalkanetriyl is substituted with a substituent selected from the group consisting of $C_{1-3}$ alkyl, COOH, C(O)H, and $C_{1-3}$ alkoxy. In a preferred embodiment, the arenetriyl, heteroarenetriyl, alkanetriyl, or heteroalkanetriyl are not substituted.

In Formula (1), each X independently is $C_{1-4}$ alkylene. Preferably, each X independently is $C_{1-3}$ alkylene, more preferably each X independently is $C_{1-2}$ alkylene. For X, optionally the alkylene is substituted with a substituent selected from the group consisting of COOH, C(O)H, and $C_{1-3}$ alkoxy. In a preferred embodiment, X is not substituted.

Preferably, in Formula (1) at least one X is $CH_2$. More preferably, in Formula (1) at least two X are $CH_2$. Most preferably, in Formula (1) all X are $CH_2$.

In a preferred embodiment, the first monomer is selected from the group consisting of 1,3,5-tris(bromomethyl)-benzene, 1,2,5-tris(bromomethyl)-benzene, 1,2,4-tris(bromomethyl)-benzene, 1,2,3-tris(bromomethyl)-benzene, 1,3,4-tris(bromomethyl)-benzene, 1,3,5-tris(chloromethyl)-benzene, 1,2,5-tris(chloromethyl)-benzene, 1,2,4-tris(chloromethyl)-benzene, 1,2,3-tris(chloromethyl)-benzene, and 1,3,4-tris(chloromethyl)-benzene. More preferably, the first monomer is 1,3,5-tris(bromomethyl)-benzene or 1,3,5-tris(chloromethyl)-benzene. Most preferably, the first monomer is 1,3,5-tris(bromomethyl)-benzene.

In preferred embodiments, the first monomer is insoluble in the second solvent.

Second monomer

In the method of the invention, the second monomer comprises at least two amines. Preferably, these amines are primary, secondary, or tertiary amines.

In a preferred embodiment, the second monomer comprises at most four amines. More preferably, the second monomer comprises at most three amines. Most preferably, the second monomer contains two amines.

It is also preferred that in the second monomer the amines are the only nucleophilic groups that can participate in the interfacial polymerization reaction. The skilled person can readily assess which nucleophilic groups can participate in the interfacial polymerization reaction, which typically is an $S_N2$ or $S_N1$ substitution reaction. Preferably, the second monomer does not contain -OH and -SH groups.

In preferred embodiments, the second monomer comprises one or more, preferably at least two, moieties selected from the group consisting of $-CH_2-NH_2$, pyridyl, pyrrolyl, piperidinyl, pyrrolidinyl, indolyl, isoindolyl, quinolinyl, isoquinolinyl, carbazolyl, acridinyl, azetidinyl, azetyl, imidazolyl, pyrazolyl, pyrazolidinyl, imidazolidinyl, triazolyl, tetrazolyl, diazinanyl, diazinyl, morpholinyl, oxazinyl, triazinanyl, triazinyl, tetrazinyl, azepanyl, azepinyl, diazepanyl, and diazepinyl.

In preferred embodiments, the second monomer is selected from the group consisting of piperazine, hexahydropyrimidine, pyrimidine, pyrazine, pyridazine, a compound according to Formula (2), a compound according to Formula (3), and a compound according to Formula (4).

Compounds according to Formula (2) are:

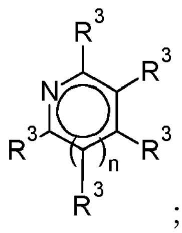
;

wherein n is 0 or 1. Preferably, n is 1.

Each $R^3$ is independently selected from the group consisting of hydrogen, $R^4$-pyridyl, $R^4$-pyrrolyl, $R^4$-piperidinyl, $R^4$-pyrrolidinyl, $C_{1-3}$ alkyl, COOH, C(O)H, and $C_{1-3}$ alkoxy. Optionally $R^4$-pyridyl, $R^4$-pyrrolyl, $R^4$-piperidinyl, and/or $R^4$-pyrrolidinyl is substituted with a substituent selected from the group consisting of $C_{1-3}$ alkyl, COOH, C(O)H, and $C_{1-3}$ alkoxy. Preferably, $R^4$-pyridyl, $R^4$-pyrrolyl, $R^4$-piperidinyl, and/or $R^4$-pyrrolidinyl are not substituted.

In Formula (2) at least one $R^3$ is $R^4$-pyridyl, $R^4$-pyrrolyl, $R^4$-piperidinyl, or $R^4$-pyrrohdinyl. Preferably, in Formula (2) one $R^3$ is $R^4$-pyridyl, $R^4$-pyrrolyl, $R^4$-piperidinyl, or $R^4$-pyrrolidinyl. In another preferred embodiment, at least one $R^3$ is selected from the group consisting of $R^4$-2-pyridyl, $R^4$-3-pyridyl, and $R^4$-4-pyridyl. Most preferably, at least one $R^3$ is $R^4$-4-pyridyl.

In preferred embodiments, in Formula (2) at least three $R^3$ are hydrogen. Most preferably, if n is 1, four $R^3$ are hydrogen.

Each $R^4$ is independently selected from the group consisting of a bond, a $C_{1-6}$ alkylene, and phenylene. Preferably, each $R^4$ is independently selected from the group consisting of a bond, a $C_{1-3}$ alkylene, and phenylene. Most preferably, each $R^4$ is a bond.

In preferred embodiments, the second monomer is a compound according to Formula (2a):

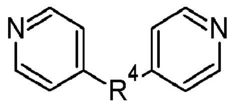
,

wherein $R^4$ is as defined for Formula (2).

Using monomers according to Formula (2) or Formula (2a) presents an additional advantage. The resulting membranes are charged, because the amines of the compounds according to Formula (2) or Formula (2a) form quaternary ammonium cations upon reacting in the interfacial polymerization reaction. As such, the resulting membrane is able to separate charged compounds. This is advantageous in various applications, including those where dyes, that are typically charged, need to be recovered, such as in textile effluents.

Compounds according to Formula (3) are:

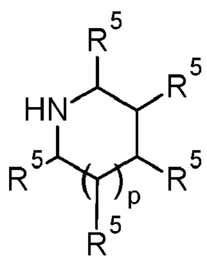

wherein p is 0 or 1. Preferably, p is 1.

Each $R^5$ is independently selected from the group consisting of hydrogen, $R^6$-piperidinyl, $R^6$-pyrrolidinyl, $C_{1-3}$ alkyl, COOH, C(O)H, and $C_{1-3}$ alkoxy. Optionally $R^6$-piperidinyl and/or $R^6$-pyrrolidinyl is substituted with a substituent selected from the group consisting of $C_{1-3}$ alkyl, COOH, C(O)H, and $C_{1-3}$ alkoxy. Preferably, $R^6$-piperidinyl and $R^6$-pyrrolidinyl are not substituted.

In Formula (3) at least one $R^5$ is $R^6$-piperidinyl or $R^6$-pyrrolidinyl. Preferably, in Formula (3) one $R^6$-piperidinyl or $R^6$-pyrrolidinyl. In another preferred embodiment, at least one $R^5$ is selected from the group consisting of $R^6$-2-piperidinyl, $R^6$-3-piperidinyl, and $R^6$-4-piperidinyl. Most preferably, at least one $R^5$ is $R^6$-4-piperidinyl.

In preferred embodiments, in Formula (3) at least three $R^5$ are hydrogen. Most preferably, if n is 1, four $R^5$ are hydrogen.

Each $R^6$ is independently selected from the group consisting of a bond, a $C_{1-6}$ alkylene, and phenylene. Preferably, each $R^6$ is independently selected from the group consisting of a bond, a $C_{1-3}$ alkylene, and phenylene. Most preferably, each $R^6$ is a bond.

In preferred embodiments, the second monomer is a compound according to Formula (3a):

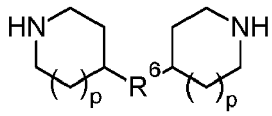

,

wherein p and $R^6$ are as defined for Formula (3).

Compounds according to Formula (4) are:

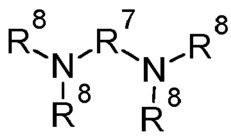

.

$R^7$ is selected from the group consisting of phenylene, and $C_{1-8}$ alkylene. Preferably, $R^7$ is selected from the group consisting of phenylene, and $C_{1-4}$ alkylene. Most preferably, $R^7$ is phenylene. Optionally, for $R^7$ the phenylene or alkylene is substituted with a substituent selected from the group consisting of $C_{1-3}$ alkyl, COOH, C(O)H, and $C_{1-3}$ alkoxy. Preferably, the phenylene and alkylene are not substituted.

Each $R^8$ is independently selected from the group consisting of hydrogen, $C_{1-8}$ alkyl, and $C_{5-7}$ aryl. Preferably, each $R^8$ is independently selected from the group consisting of hydrogen, $C_{1-4}$ alkyl, and phenyl. In preferred embodiments, at least two $R^8$ are hydrogen. More preferably, at least three $R^8$ are hydrogen. Most preferably, all $R^8$ are hydrogen.

Optionally, for $R^8$ alkyl and/or aryl is substituted with a substituent selected from the group consisting of $C_{1-3}$ alkyl, COOH, C(O)H, and $C_{1-3}$ alkoxy. Preferably, the alkyl and aryl are not substituted.

In preferred embodiments, the second monomer is selected from the group consisting of 4,4'-bipyridine, p-phenylenediamine, m-phenylenediamine, and o-phenylenediamine. The use of m-phenylenediamine as the second monomer is especially preferred, because m-phenylenediamine in general leads to a rougher surface, that increases the membrane surface area, a better hydrophilicity and a higher water flux as compared to using other monomers. Likewise, the use of 4,4'-bipyridine is preferred as it provides the advantage of yielding a charged membrane, as explained above.

Preferably, the second monomer is insoluble in the first solvent.

Reaction conditions

The method of the invention comprises the step of subjecting a first monomer to an interfacial polymerization reaction by contacting the first monomer with a second monomer. At least at the start of the interfacial polymerization reaction, the first monomer is dissolved in a first solvent, and the second monomer is dissolved in a second solvent. As is typical for an interfacial polymerization method, the first monomer and the second monomer react at the interface between the first solvent and the second solvent.

It will be understood that the interfacial polymerization reaction may be initiated in several ways, depending on the order in which the monomers and solvents are contacted. For example, the interfacial polymerization reaction can be initiated by first dissolving the first monomer in the first solvent, dissolving the second monomer in the second solvent, and contacting the first solvent containing the dissolved first monomer with the second solvent containing the dissolved second monomer. Alternatively, the interfacial polymerization reaction can be initiated by dissolving the first monomer in the first solvent, contacting the first solvent containing the first monomer with the second solvent, and contacting the second monomer with the second solvent. This alternative approach also works vice versa, viz. when the second monomer is dissolved in the second solvent, and the second solvent containing the second monomer is contacted with the first solvent, and contacting the first monomer with the first solvent. Even further approaches can be carried out, viz. first contacting the first and the second solvent, and then contacting the solvents with the first monomer and second monomer in any order; or first contacting the first monomer and second monomer in a dry state, and contacting the monomers with the first solvent and the second solvent in any order.

In preferred embodiments, the interfacial polymerization reaction is carried out on a solid support. This preferred approach results in a solid support coated with a thin membrane. To this end, the solid support may be soaked with the

first solvent containing the first monomer or the second solvent containing the second monomer prior to the interfacial polymerization reaction. Preferably, the solid support is soaked with water containing the second monomer prior to the interfacial polymerization reaction. Preferably, after soaking and prior to the interfacial polymerization reaction excess solvent is removed from the solid support. Then, sufficient monomer-containing solvent is retained on the solid support to form an interface when the solid support is contacted with the first or second solvent.

Preferably, the solid support is an ultrafiltration membrane. More preferably, the solid support is selected from the group consisting of a polyethersulfone membrane, a polyacrylonitrile membrane, and a polybenzimidazole membrane.

In preferred embodiments, the interfacial polymerization reaction is carried out at a temperature at which both the first solvent and the second solvent are liquid. The skilled person is well aware of the melting points and boiling points of commercially available solvents, and can thus readily assess in which temperature range the interfacial polymerization reaction is to be carried out. Preferably, the interfacial polymerization reaction is carried out at a temperature in a range of from 4 °C to 80 °C, more preferably in a range of from 10 °C to 60 °C, even more preferably in a range of from 15 °C to 50 °C, and more preferably still in a range of from 20 °C to 40 °C. Most preferably, the interfacial polymerization reaction is carried out at room temperature, which is preferably in a range of from 15 °C to 25 °C.

In preferred embodiments, at the start of the interfacial polymerization reaction the first monomer is present in the first solvent at a concentration in a range of from 0.1 wt% to 5 wt%, more preferably in a range of from 0.2 wt% to 4 wt%, even more preferably in a range of from 0.3 wt% to 3 wt%, more preferably still in a range of from 0.4 wt% to 2 wt%, yet more preferably in a range of from 0.5 wt% to 1 wt%, and most preferably in a range of from 0.6 wt% to 0.8 wt%, wherein the wt% is as compared to the weight of the first solvent.

In preferred embodiments, at the start of the interfacial polymerization reaction the second monomer is present in the second solvent at a concentration in a range of from 0.1 wt% to 10 wt%, more preferably in a range of from 0.2 wt% to 5 wt%, even more preferably in a range of from 0.3 wt% to 4 wt%, more preferably still in a range of from 0.4 wt% to 3 wt%, yet more preferably in a range of from 0.5 wt% to 2 wt%, and most preferably in a range of from 0.8 wt% to 1.2 wt%, wherein the wt% is as compared to the weight of the second solvent.

In preferred embodiments, the molar ratio (mol/mol) of the first monomer over the second monomer at the start of the interfacial polymerization reaction is in a range of from 0.3 to 1, more preferably in a range of from 0.4 to 0.8, and most preferably in a range of from 0.5 to 0.7.

Typically, the skilled person is able to establish for how long the interfacial polymerization should be carried out by visual inspection of reaction progress. The reaction time depends on the reactivity of the monomers used. In a preferred embodiment, the interfacial polymerization reaction is carried out for at least 5 minutes, more preferably for at least 10 minutes, and most preferably for at least 30 minutes. Preferably, the interfacial polymerization reaction is carried out for at most 10 days, more preferably for at 6 days, and most preferably for at most 4 days.

In a preferred embodiment, the interfacial polymerization reaction is carried out in an airtight container. In this way, evaporation of solvent can be reduced, if desired.

The method of the invention preferably includes further steps, such as rinsing and/or drying the membrane after preparation.

Membranes

In one aspect, the present invention relates to a membrane obtainable by the method of the invention. Typically, the method of the invention results in membranes with a different structure, e.g. due to a higher crosslink density, than membranes prepared by most other methods used in the art, such as casting methods. However, it is very difficult to quantitatively describe these differences in structure. Nevertheless, membranes obtainable by the method of the invention can be readily distinguished from prior art membranes by visual inspection, e.g. by comparing scanning electron microscopy images of the surface and cross section of the membranes. This technique is readily available to the skilled person, and can be routinely performed.

The invention also relates to membranes comprising, preferably consisting essentially of, a polymer network comprising a repeating unit according to Formula (6):

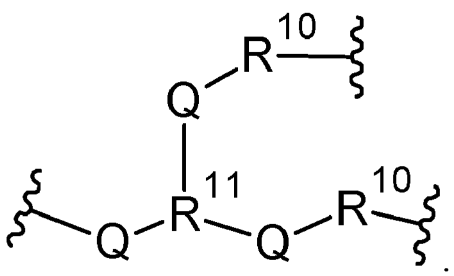

It will be understood that in the polymer network a moiety $R^{10}$ is typically connected to a moiety Q of a different repeating unit. A moiety $R^{10}$ is not directly linked to another moiety $R^{10}$ *(i.e.* -$R^{10}$-$R^{10}$- is not possible). In addition, it will be understood that in the polymer network a moiety Q is not directly linked to another moiety Q *(i.e.* -Q-Q- is not possible).

As such, two coupled repeating units according to Formula (6) may be -Q-$R^{11}$(Q-$R^{10}$-Q-$R^{11}$(Q-$R^{10}$)-Q-$R^{10}$-)-Q-$R^{10}$-, and not for example -Q-$R^{11}$(Q-$R^{10}$-$R^{10}$-Q-$R^{11}$(Q-$R^{10}$)-Q-)-Q-$R^{10}$-.

It will also be understood that in the polymer network other repeating units than those of Formula (6) may be present, for example caused by substitution of a halogen in the first monomer by a solvent (for example water) or oxidation of an amine during or after the interfacial polymerization reaction. Preferably, at least 80 wt% of the polymer network consists of the repeating unit according to Formula (6), more preferably at least 90 wt%, and most preferably at least 95 wt%.

In Formula (6), $R^{11}$ is selected from the group consisting of $C_{5-6}$ arenetriyl, $C_{5-6}$ heteroarenetriyl, $C_{1-8}$ alkanetriyl, and $C_{1-8}$ heteroalkanetriyl. Preferably, $R^{11}$ is selected from the group consisting of benzenetriyl, $C_5$ heteroarenetriyl, $C_{2-4}$ alkanetriyl, and $C_{1-3}$ heteroalkanetriyl. More preferably, $R^{11}$ is selected from the group consisting of benzenetriyl, and $C_{2-4}$ alkanetriyl. Most preferably, $R^{11}$ is benzenetriyl. For $R^{11}$, preferred heteroarenetriyl groups are furantriyl and thiophenetriyl. For $R^{11}$, preferred heteroalkanetriyl groups contain at most two heteroatoms selected from the group consisting of O, P, and S.

For $R^{11}$, optionally the arenetriyl, heteroarenetriyl, alkanetriyl, or heteroalkanetriyl is substituted with a substituent selected from the group consisting of $C_{1-3}$ alkyl, COOH, C(O)H, and $C_{1-3}$ alkoxy. In a preferred embodiment, the arenetriyl, heteroarenetriyl, alkanetriyl, or heteroalkanetriyl are not substituted.

In Formula (6), each Q independently is $C_{1-4}$ alkylene. Preferably, each Q independently is $C_{1-3}$ alkylene, more preferably each Q independently is $C_{1-2}$ alkylene. For Q, optionally the alkylene is substituted with a substituent selected from the group consisting of COOH, C(O)H, and $C_{1-3}$ alkoxy. In a preferred embodiment, Q is not substituted. Preferably, in Formula (6) at least one Q is $CH_2$. More preferably, in Formula (6) at least two Q are $CH_2$. Most preferably, in Formula (6) all Q are $CH_2$.

In Formula (6) each $R^{10}$ is independently a repeating unit containing at least two amines, wherein $R^{10}$ is connected to Q via an amine, wherein the amine is part of $R^{10}$.

Preferably, in Formula (6) each $R^{10}$ is independently selected from the group consisting of

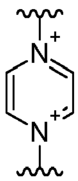, 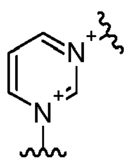, 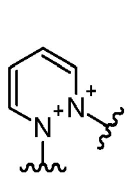, 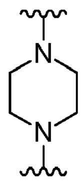, 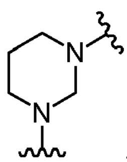, 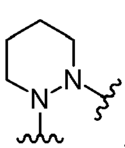, 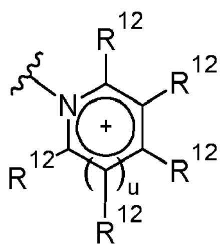, 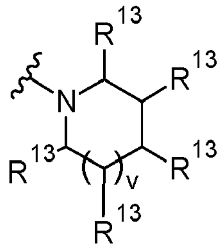, and

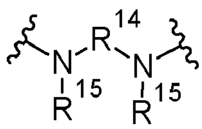.

Herein, the wiggly lines denote a bond to Q.

Each u is 0 or 1. Preferably, u is 1. Each v is 0 or 1. Preferably, v is 1.

Each $R^{12}$ or $R^{13}$ is independently selected from the group consisting of hydrogen, $R^{16}$-pyridyl, $R^{16}$-pyrrolyl, $R^{16}$-piperidinyl, $R^{16}$-pyrrolidinyl, $C_{1-3}$ alkyl, COOH, C(O)H, and $C_{1-3}$ alkoxy. Optionally $R^{16}$-pyridyl, $R^{16}$-pyrrolyl, $R^{16}$-piperidinyl, and/or $R^{16}$-pyrrolidinyl is substituted with a substituent selected from the group consisting of $C_{1-3}$ alkyl, COOH, C(O)H, and $C_{1-3}$ alkoxy. Preferably, $R^{16}$-pyridyl, $R^{16}$-pyrrolyl, $R^{16}$-piperidinyl, and/or $R^{16}$-pyrrolidinyl are not substituted.

Preferably, for $R^{10}$ at least one $R^{12}$ or $R^{13}$ is $R^{16}$-pyridyl, $R^{16}$-pyrrolyl, $R^{16}$-piperidinyl, or $R^{16}$-pyrrolidinyl, wherein the amine of the pyridyl, pyrrolyl, piperidinyl, or pyrrolidinyl is connected to a moiety Q. Preferably, for $R^{10}$ one $R^{12}$ or $R^{13}$ is $R^{16}$-pyridyl, $R^{16}$-pyrrolyl, $R^{16}$-piperidinyl, or $R^{16}$-pyrrolidinyl, wherein the amine of the pyridyl, pyrrolyl, piperidinyl, or pyrrolidinyl is connected to a moiety Q. In another preferred embodiment, at least one $R^{12}$ or $R^{13}$ is selected from the group consisting of $R^{16}$-2-pyridyl, $R^{16}$-3-pyridyl, and $R^{16}$-4-pyridyl, wherein the amine of the pyridyl is connected to a moiety Q. Most preferably, at least one $R^{12}$ or $R^{13}$ is $R^{16}$-4-pyridyl, wherein the amine of the pyridyl is connected to a

moiety Q.

In preferred embodiments, in Formula (6) at least three $R^{12}$ or $R^{13}$ are hydrogen. Most preferably, if u or v is 1, four $R^{12}$ or $R^{13}$ are hydrogen.

Each $R^{16}$ is independently selected from the group consisting of a bond, a $C_{1-6}$ alkylene, and phenylene. Preferably, each $R^{16}$ is independently selected from the group consisting of a bond, a $C_{1-3}$ alkylene, and phenylene. Most preferably, each $R^{16}$ is a bond.

$R^{14}$ is selected from the group consisting of phenylene, and $C_{1-8}$ alkylene. Preferably, $R^{14}$ is selected from the group consisting of phenylene, and $C_{1-4}$ alkylene. Most preferably, $R^{14}$ is phenylene. Optionally, for $R^{14}$ the phenylene or alkylene is substituted with a substituent selected from the group consisting of $C_{1-3}$ alkyl, COOH, C(O)H, and $C_{1-3}$ alkoxy. Preferably, the phenylene and alkylene are not substituted.

Each $R^{15}$ is independently selected from the group consisting of hydrogen, $C_{1-8}$ alkyl, and $C_{5-7}$ aryl. Preferably, each $R^{15}$ is independently selected from the group consisting of hydrogen, $C_{1-4}$ alkyl, and phenyl. In preferred embodiments, at least two $R^{15}$ are hydrogen. More preferably, at least three $R^{15}$ are hydrogen. Most preferably, all $R^{15}$ are hydrogen. Optionally, for $R^{15}$ alkyl and/or aryl is substituted with a substituent selected from the group consisting of $C_{1-3}$ alkyl, COOH, C(O)H, and $C_{1-3}$ alkoxy. Preferably, the alkyl and aryl are not substituted.

Most preferably, in Formula (6) each $R^{10}$ is independently selected from the group consisting of

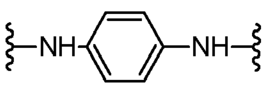 , 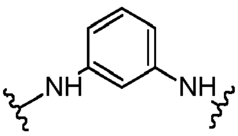 , 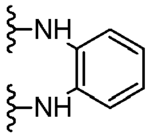 , and 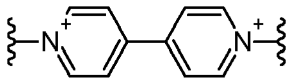 .

Preferably, in Formula (6) each $R^{10}$ is

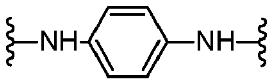 .

Preferably, in Formula (6) each $R^{10}$ is

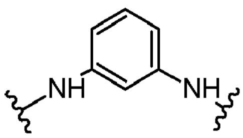 .

Preferably, in Formula (6) each $R^{10}$ is

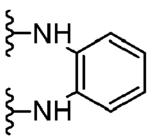 .

Preferably, in Formula (6) each $R^{10}$ is

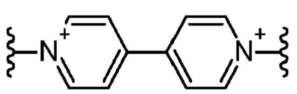 .

For $R^{10}$, the wiggly lines denote a bond to Q, either of the same repeating unit or a different repeating unit.

Preferably, the membrane of the invention is a thin film composite membrane. In preferred embodiments, the membrane of the invention is attached to a solid support. Preferably, the solid support is a membrane, preferably an ultrafiltration membrane. More preferably, the solid support is selected from the group consisting of a polyethersulfone membrane, a polyacrylonitrile membrane, and a polybenzimidazole membrane.

Preferably, the membrane of the invention has a thickness in a range of from 10 nm to 1000 nm, more preferably in a range of from 50 nm to 900 nm, more preferably in a range of from 100 nm to 850 nm, more preferably in a range of from 200 nm to 800 nm, more preferably in a range of from 300 nm to 750 nm, more preferably in a range of from 400 nm to 700 nm, and most preferably in a range of from 500 nm to 650 nm.

It will be understood that the properties of the membrane such as the water permeance and pore size can be tuned e.g. by varying the monomers used in the process of producing the membrane.

In preferred embodiments, the water permeance of the membrane of the invention is in a range of from 0.05 $L.m^{-2}h^{-2}bar^{-1}$ to 3 $L.m^{-2}h^{-2}bar^{-1}$, more preferably in a range of from 0.1 $L.m^{-2}h^{-2}bar^{-1}$ to 2 $L.m^{-2}h^{-2}bar^{-1}$, and most preferably in a range of from 0.2 $L.m^{-2}h^{-2}bar^{-1}$ to 1.6 $L.m^{-2}h^{-2}bar^{-1}$.

In preferred embodiments, the molecular weight cut-off of the membrane of the invention is in a range of from 100 Da to 100 kDa, preferably in a range of from 200 Da to 50 kDa, more preferably in a range of from 300 Da to 20 kDa, even more preferably in a range of from 400 Da to 10 kDa, and most preferably in a range of from 500 Da to 1000 Da.

Polymers

In one aspect, the invention relates to a polymer comprising a repeating unit according to Formula (5). It will be understood that in the polymer comprising a repeating unit according to Formula (5), a moiety $R^9$ is not directly linked to another moiety $R^9$ *(i.e.* $-R^9-R^9-$ is not possible). Thus, a polymer of the invention with at least two repeating units according to Formula (5) may be

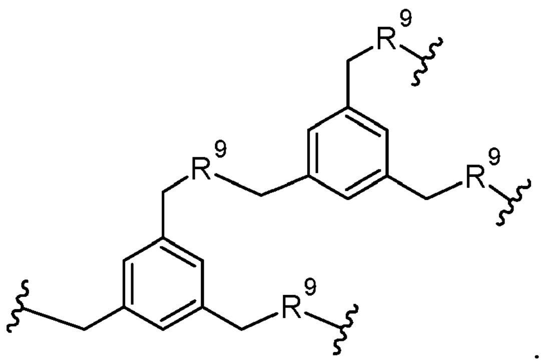

Preferably, at least 80 wt% of the polymer of the invention consists of the repeating unit according to Formula (5), more preferably at least 90 wt%, and even more preferably at least 95 wt%. Most preferably, the polymer of the invention essentially consists of repeating units according to Formula (5).

Preferably, each $R^9$ is

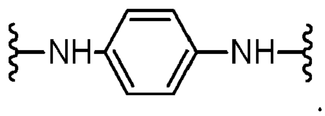

Preferably, each $R^9$ is

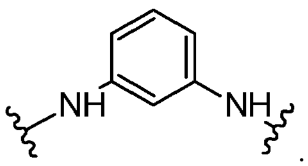

Preferably, each $R^9$ is

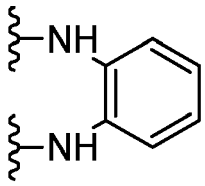

.

In preferred embodiments, the polymer of the invention has a molecular weight of at least 1 kDa, more preferably of at least 10 kDa, at least 20 kDa, at least 30 kDa, at least 40 kDa, at least 50 kDa, at least 60 kDa, at least 70 kDa, at least 80 kDa, at least 90 kDa, at least 100 kDa, at least 200 kDa, at least 300 kDa, at least 400 kDa, at least 500 kDa, at least 600 kDa, at least 700 kDa, at least 800 kDa, at least 900 kDa, at least 1 MDa, at least 2 MDa, at least 3 MDa, at least 4 MDa, and most preferably at least 5 MDa.

In preferred embodiments, the polymer of the invention has a number of repeating units according to Formula (5) of at least 10, more preferably at least 50, at least 100, at least 500, at least 600, at least 700, at least 800, at least 900, at least 1000, at least 2000, at least 3000, at least 4000, at least 5000, at least 6000, at least 7000, at least 8000, at least 9000, at least 10,000, at least 20,000, at least 30,000, at least 40,000, or most preferably at least 50,000.

Uses

The membranes of the invention can be used in various applications. For example, the invention also relates to the use of the membrane of the invention for water recycling. Moreover, the invention also relates to the use of the membrane of the invention for filtering organic solvents. Preferred organic solvents are ethyl acetate, dichloromethane, acetone, benzene, chloroform, diethyl ether, dimethyl formamide, dimethyl sulfoxide, 1,4-dioxane, ethanol, heptane, hexane, methanol, propanol, pyridine, tetrahydrofuran, toluene, and xylene. Furthermore, the invention relates to the use of the membrane of the invention for wastewater treatment.

In addition, the membrane of the invention can be used at harsh and extreme conditions. As such, the invention relates to the use of the membrane of the invention at a pH of at least 9, preferably at least 10, more preferably at least 11. In addition, the invention relates to the use of the membrane of the invention at a pH of at most 5, preferably at most 4, more preferably at most 3. Moreover, the invention relates to the use of the membrane of the invention at a pH of at least 9, preferably at least 10, more preferably at least 11.

The invention is hereinafter illustrated with reference to the following, non-limiting, examples.

EXAMPLES

**Example 1 - Materials and characterization methods**

1.1 Materials

The following materials were used in all Examples.

1,3,5-Tris(bromomethyl)benzene (tBrMeB, 97%), p-phenylenediamine (PPD, 99%), m-phenylenediamine (MPD, 99%), polyethylene glycol (PEG, Mw = 400, 600 g $mol^{-1}$), sodium chloride (NaCl, ACS reagent, ≥99%, anhydrous, Redi-Dri™, free-flowing), sodium sulfate ($Na_2SO_4$, ACS reagent, ≥99%, anhydrous, granular, free-flowing, Redi-DriTM) and sodium hydroxide (NaOH, BioXtra, ≥98%) were obtained from Sigma-Aldrich. Magnesium sulfate heptahydrate ($MgSO_4$, ACS reagent. Ph. Eur.), nitric acid ($HNO_3$, 1 mol/L, Titripur®) and polyethylene glycol (PEG) 1000 (EMPROVE ESSENTIAL) were supplied by Merck. Magnesium chloride hexahydrate ($MgCl_2$, 99.0-101.0% AnalaR NORMAPUR ACS Reag.) was purchased from VWR chemicals (Netherlands). n-Hexane (anhydrous, over molecular sieves) was acquired from Alfa Aesar (Germany). PEG 200 was obtained from Fluka (Germany).

Hydrophilised polyethersulfone (PES) ultrafiltration membranes with a molecular weight cut off (MWCO) of 30 kDa were obtained from Microdyn-Nadir (UH 030, Germany) and were used as support membrane. According to the specifications as well as a previously reported study, the polyethersulfone ultrafiltration support membranes are stable in solutions with pH ranging from 0 to 14.

1.2 membrane characterizations

A field emission scanning electron microscope (FESEM, JSM-7610F) was used to visualize the surface and cross section of the membranes. For the sample preparation, thin film composites membranes were first immersed in isopropanol 3 times, 30 minutes each, followed by soaking 3 times in hexane, 30 minutes each. Afterwards, the membranes were air dried, fractured in liquid nitrogen and coated with an ultrathin 5 nm Pt/Pd layer.

The surface chemistry of the membranes was examined by attenuated total reflectance Fourier transform infrared spectroscopy (ATR-FTIR, PerkinElmer Spectrum Two). Spectra were collected from 16 scans with a resolution of 4 $cm^{-1}$ over a wavelength range from 400 - 4000 $cm^{-1}$. The hydrophilicity of the membranes was measured using a contact angle goniometer in the sessile drop method (DataPhysics OCA20). The error bars in the contact angle results represent the standard deviation of 8 measurements.

1.3 Separation performance

Nanofiltration performance was evaluated using a dead-end filtration cell at room temperature at 10 bar. The pure water permeance was evaluated using demineralized water and determined according to Eq. (1):

$$PWP = \frac{V}{At\Delta P} \quad (1)$$

Herein, *PWP* is the permeance ($L \cdot m^{-2}h^{-1}bar^{-1}$), *V* the permeate volume (L), A the membrane area ($m^2$), t the filtration time (h), and $\Delta P$ the transmembrane pressure (bar).

The rejection (R, %) was measured by permeating salt solutions of 1 g $\cdot L^{-1}$ containing either NaCl, $MgCl_2$, $MgSO_4$ or $Na_2SO_4$. During measurements the solution was stirred in order to minimalize concentration polarization. The rejection rate (R) of salts was obtained using Eq. (2), where $C_p$ and $C_f$ correspond to the salt concentrations (mg $\cdot L^{-1}$) in permeate and feed solutions, respectively.

$$R = (1 - \frac{C_p}{C_f}) \times 100\% \quad (2)$$

A 3310 conductivity meter (WTW, Germany) was employed to analyze the salt concentrations in the feed and the permeate solutions. Error bars depict the standard deviation of either 3 (PPD) or 2 (MPD) different membrane samples.

1.4 Molecular weight cut-off and pore size distribution

The molecular weight cut-off of the membranes was evaluated with an aqueous solution containing a mixture of polyethylene glycols (PEGs) with a molecular weight of 200, 400, 600 and 1000 g $\cdot mol^{-1}$ (each fraction 1 g $\cdot L^{-1}$). Compositions of permeate and feed were analyzed by gel permeation chromatography (GPC, Agilent1200/1260 Infinity GPC/SEC series, Polymer Standards Service Suprema 8 x 300 mm columns in series (1000 Å, 10 $\mu$M; 30 Å, 10 $\mu$M).) and the molecular weight cut-off was obtained from a plot of PEG standards rejection rates versus their molecular weights. The MWCO is defined as the molar mass that is retained for 90% or more. Error bars depict the standard deviation of either 3 (PPD) or 2 (MPD) different membrane samples.

The solute transport experiments were also used to calculate the pore size and the pore size distribution of the membranes. In short, the molecular weight (*M*) of the PEGs can be related to the solute radius (r) according to Equation 3.

$$r = 16.73 \text{ x } 10^{-12} \text{ x } M^{0.557} \quad (3)$$

When the solute rejection *(R)* is plotted against the solute radius (r) on a log-normal probability graph, a linear relationship between R and r can be observed. The mean effective pore size ($\mu_p$) can then be obtained by assuming it to be the same as r when R = 50%. Finally, the pore size distribution can be obtained using the probability density function in Equation 4.

$$\frac{dR(d_p)}{dd_p} = \frac{1}{d_p \ln \sigma_p \sqrt{2\pi}} \exp\left[-\frac{(ln\, d_p - ln\, \mu_p)^2}{2(ln\, \sigma_p)^2}\right] \quad (4)$$

Where $d_p$ is the effective pore diameter and $\sigma_p$ is the geometric standard, defined as the ratio between the values of r at *R* = 84.13% and R = 50%. Further details can be found in the background reference K.H. Youm, and W.S. Kim, J. Chem. Eng. Jpn., 1991, volume 24, pages 1-7.

1.5 pH stability

In order to determine the robustness of the membranes in contact with solutions at extreme pH, two sets of experiments were designed and conducted.

Firstly, the pH-stability was measured ex-situ. This means that after measuring the nanofiltration performance, the membrane samples were stored in an aqueous solution of either 0.1 M NaOH or 0.1 M $HNO_3$ for regular time intervals at room temperature. After the exposure, the membrane samples were thoroughly washed with deionized water and their nanofiltration performance was evaluated. Error bars depict the standard deviation of either 3 (PPD) or 2 (MPD) different membrane samples.

In the in-situ experiments, the pure water permeance and the salt rejection of the pristine membranes were measured, followed by filtration of 0.1 M NaOH solution for 6 hours. Afterwards, the nanofiltration performance was measured again. Next, a solution of 0.1 M $HNO_3$ was filtered through the membrane for 6 hours. Finally, the nanofiltration performance of the membrane was measured for the last time.

## Example 2 - Synthesis of freestanding thin films

Freestanding polyamine thin films were prepared by interfacial polymerization. p-Phenylenediamine was dissolved in water with various concentrations. A solution of 0.7 wt.% tBrMeB in hexane was slowly added to the aqueous solution and allowed to react for various durations. The reaction duration for each experiment was recorded from the moment of tBrMeB addition until a visual layer at the interface appeared. Based on the observations, the best conditions were chosen for developing thin film composites membranes.

The optimum conditions for the interfacial polymerization reaction when using p-phenylenediamine as a monomer, resulting in an interconnected firm layer, are illustrated in Figure 1. In short, 1 wt.% p-phenylenediamine was allowed to react with 0.7 wt.% tBrMeB for 30 minutes at room temperature.

Other optimum conditions apply for other monomers. For example, the interfacial polymerization reaction was also performed using 4,4'-bipyridine as a monomer in the aqueous phase and 0.7 wt.% tBrMeB in hexane. Then, the reaction was carried out for 4 days at room temperature.

## Example 3 - Thin film composites membrane preparation

Thin film composites membranes were prepared by interfacial polymerization directly on the polyethersulfone supports. Prior to interfacial polymerization, polyethersulfone supports were immersed in water overnight to ensure the complete removal of any surfactants/contaminants. Afterwards, interfacial polymerization was performed by firstly exposing the polyethersulfone surface to an aqueous solution. In the case of p-phenylenediamine, 1 wt.% p-phenylenediamine in water was exposed to the surface for 2 minutes. The diamine loaded polyethersulfone membranes were then wiped with a tissue paper and passed with a rubber roller to remove excess solution. The membranes were then subjected to a tBrMeB solution for 30 minutes. The whole interfacial polymerization setup was encased in a sealed container to prevent hexane evaporation during interfacial polymerization. The resulting thin film composites membranes were withdrawn from the tBrMeB solution, rinsed with hexane and dried for 1 minute in air and then preserved in water for further test and use. In the case of m-phenylenediamine, 5 wt.% m-phenylenediamine was exposed to the polyethersulfone surface for 5 minutes. Then, the solution was drained by applying a vacuum, until the surface of the m-phenylenediamine loaded polyethersulfone membranes was dry. After this, the membranes were subjected to tBrMeB for 5 minutes and treated as described before.

Fabricated membranes were tested for their reproducibility in terms of pure water permeance and NaCl rejection. Six membrane samples that were prepared under the exact same conditions (i.e., monomer concentration, reaction duration, volume of the reacting solution) were considered. First, the pure water permeance (PWP) was measured. Afterwards, the pure water was replaced by an aqueous solution containing 1 g $\cdot L^{-1}$ NaCl and the rejection was measured.

The optimum conditions for interfacial polymerization were used to prepare thin film composites membranes with p-phenylenediamine as the aqueous phase and tBrMeB as the organic phase monomers. In order to evaluate the success of interfacial polymerization on the polyethersulfone support, the NF performance of the thin film composites membranes and that of polyethersulfone supports were measured and are reported in Table 1 and Figure 2.

Table 1 thin film composites membrane properties

| Property | polyethersulfone support | p-phenylenediamine-tBrMeB membrane |
|---|---|---|
| **pure water permeance ($L \cdot m^{-2} h^{-1} bar^{-1}$)** | 51 ± 5.3 | 0.28 ± 0.09 |

(continued)

| Property | polyethersulfone support | p-phenylenediamine-tBrMeB membrane |
|---|---|---|
| molecular weight cut-off ($g \cdot mol^{-1}$) | 30.000 | 820 ± 132 |

The dramatic reduction of molecular weight cut-off and the pure water permeance suggests the presence of a dense layer atop of the polyethersulfone support. These results are consistent with the morphological observations in Figure 3. Unlike the porous surface of polyethersulfone with visible pores, the surface of thin film composites membrane is rather dense. However, the surface morphology of the thin film composites membrane differs from the so-called ridge and valley structure of the polyamide thin film composites membranes. The slow reaction rate of tBrMeB could be the cause for this discrepancy. As the interfacial polymerization progresses, the newly formed polymers have enough time to rearrange and pack in a more ordered manner. The thickness of the interfacial polymerization layer is roughly 450 nm.

Figure 4 compares the FTIR spectra of the polyethersulfone and the thin film composites membrane. The characteristic peaks of polyethersulfone are consistent with the polyethersulfone spectra published in literature. A distinguishable peak at 1514 $cm^{-1}$ appears after thin film deposition on the polyethersulfone support which can be assigned to $NO_2$ (the oxidized form of the unreacted terminal of p-phenylenediamine). The peak at 1600 $cm^{-1}$ may be attributed to the secondary amine that is expected in the tBrMeB-p-phenylenediamine network.

**Example 4 - Reproducibility of the membranes**

The results of the reproducibility measurements are depicted in Figure 5. Although the variation of rejection is almost negligible, pure water permeance shows some discrepancy. This scattering could be due to the noncontrollable parameters of the interfacial polymerization process, such as uniformity of the porosity, draining of excessive reacting solutions etc. Nevertheless, the individual deviation for both permeance and rejection is less than 10%.

**Example 5 - pH stability**

Figure 6 shows the evolution of pure water permeance and $MgCl_2$ rejection after prolonged exposure, up to 2 months, to acidic and alkaline conditions. Both permeance and rejection show an initial rapid increase which then levels off to a constant value. Under acidic conditions, the permeance increases from 0.3 ± 0.07 to 1.27 ± 0.09 $L \cdot m^{-2}h^{-1}bar^{-1}$ and the rejection from 21 ± 4 to 52 ± 3%. Under alkaline conditions, the increase is less severe, permeance increases from 0.25 ± 0.04 to 0.46 ± 0.04 $L \cdot m^{-2}h^{-1}bar^{-1}$, and rejection from 21 ± 2 to 27 ± 2%. The initial performance increase can be explained by the chemical cleaning effects of acidic/alkaline solutions, where the low molecular weight polymers or/and unreacted monomers are washed away, making water to pass through more easily resulting in a higher salt rejection. Additionally, nitric acid tends to form hydrogen bonds with amine groups resulting in a tighter pore size. Nevertheless, the results show that the thin film composites membranes are stable in contact with extreme pH for a prolonged time.

In order to better demonstrate the robustness of the membranes and their applications for filtration under extreme pH conditions, an in-situ exposure experiment was carried out. Both acidic and alkaline solutions were filtered through the membrane. As can be seen in Figure 7a, the membrane performance after the second cycle (i.e. alkaline filtration) remains almost unchanged, while after acidic filtration all the salt rejections increase. This observation is in good agreement with the results from ex-situ filtration experiments where exposure to acidic solutions had a more severe effect than to the alkaline one. Figures 7b and 7c show the molecular weight cut-off and the pore size distribution of the membrane after each cycle, respectively. It is evident that the acidic filtration reduces the membrane pore size and narrows down its distribution. The molecular weight cut-off reduces from 820 to 480 $g \cdot mol^{-1}$ after acidic filtration, for which the origin has been explained in the previous paragraph.

**Example 6 - Morphology and surface analysis**

It has been shown that the membrane performance of p-phenylenediamine-tBrMeB membranes is stable after extreme pH exposure. Next to the performance, the morphology and surface changes of the membranes before and after pH exposure were also analyzed.

Figure 8 shows the FESEM images of the surface, cross-section and selective layer of the membranes. When comparing the images of the membranes before and after pH exposure, no clear difference can be found, e.g. the selective layer is intact that is consistent with the other results.

In Figure 9 the water contact angle of the polyethersulfone support and thin film composites membranes before and after pH exposure is shown. It shows that the contact angle after pH 13 is similar to the pristine membrane (70°),

while after pH 1 the contact angle drops (57°). This indicates that the membrane becomes more hydrophilic after exposure to pH 1 and might also explain the higher pure water permeance.

**Example 7 - Surface chemistry**

To further confirm the stability of the membranes in extreme pH conditions, the surface chemistry of the membranes before and after pH treatment was studied by means of FTIR. From Figure 10 it can be concluded that there is no clear change in the chemistry of the membranes after pH exposure as the FTIR spectra are the same. This indicates that the amine bonds are stable under the exposed conditions.

**Example 8 - Enhanced performance**

The inventors have shown the successful preparation of p-phenylenediamine-tBrMeB thin film composites membranes with great pH stability. However, the permeance of these membranes can be considered rather low. In order to enhance the performance of the thin film composites membranes, m-phenylenediamine (m-phenylenediamine) was used as an alternative monomer to p-phenylenediamine. Thus, thin film composites membranes were also prepared via interfacial polymerization with 5 wt.% m-phenylenediamine in water as the aqueous phase and 0.7 wt.% tBrMeB in hexane as the organic phase and allowed to react for 10 minutes. These conditions were chosen such that the $MgSO_4$ rejection was comparable to that of p-phenylenediamine membranes and the performance in terms of pure water permeance and molecular weight cut-off could be evaluated. The resulting m-phenylenediamine-tBrMeB membranes show a permeance of 1.3 ± 0.3 $L \cdot m^{-2}h^{-1}bar^{-1}$ and have a molecular weight cut-off of 566 ± 43 $g \cdot mol^{-1}$ (Table 2). Compared to the pristine values of membranes prepared with p-phenylenediamine, this indicates 3 times higher permeance, at similar rejection values and a lower molecular weight cut-off. Therefore, it can be concluded that the use of m-phenylenediamine as a monomer enhances the performance of this type of membrane. The more hydrophilic character of membranes prepared with m-phenylenediamine is also confirmed by the contact angle data showing a slightly lower value than for p-phenylenediamine membranes (63 vs 70°).

Table 2 thin film composites membrane properties

| | **p-phenylenediamine-tBrMeB** | **m-phenylenediamine-tBrMeB** |
|---|---|---|
| **pure water permeance ($L \cdot m^{-2}h^{-1}bar^{-1}$)** | 0.28 ± 0.09 | 1.3 ± 0.3 |
| **$MgSO_4$ rejection (%)** | 68 ± 3.9 | 67 ± 1.2 |
| **molecular weight cut-off ($g \cdot mol^{-1}$)** | 820 ± 132 | 566 ± 43 |

Figure 11 shows FESEM images of the m-phenylenediamine-tBrMeB membranes. Compared to the p-phenylenediamine membranes, it shows a rougher surface with a kind of nodular structure. The interfacial polymerization layer has a thickness of approximately 640 nm, that is thicker than the p-phenylenediamine layer. Therefore, the increased permeance is not a result of a thinner layer and lower resistance, but probably because of the more hydrophilic structure. Moreover, thin film composites membranes made of m-phenylenediamine tend to have higher free volume as compared to p-phenylenediamine.

To be certain about the pH stability, also here ex-situ pH stability tests were performed and the results are shown in Figure 12. Similar to the results obtained with p-phenylenediamine, the membranes show stable performance after exposure to pH solutions for a prolonged time. After acidic exposure an increase in salt rejection is observed from 62.0 ± 9.3 % to 84.9 ± 2.6 % which can also be explained by the hydrogen bond formation between the selective layer and nitric acid.

Overall, it is concluded that amine-tBrMeB NF membranes show excellent long-term pH stability.

## Claims

1. A method for preparing a membrane, wherein the method comprises the step of subjecting a first monomer to an interfacial polymerization reaction by contacting the first monomer with a second monomer,
   wherein the first monomer is dissolved in a first solvent, and the second monomer is dissolved in a second solvent, wherein the first solvent and the second solvent are immiscible,
   wherein the first monomer is a compound according to Formula (1):

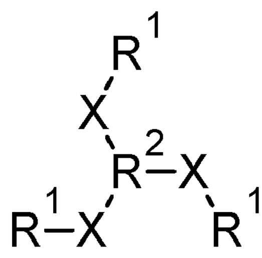,

wherein each $R^1$ independently is a halogen, preferably chloride or bromide,
wherein $R^2$ is selected from the group consisting of $C_{5-6}$ arenetriyl, $C_{5-6}$ heteroarenetriyl, $C_{1-8}$ alkanetriyl, and $C_{1-8}$ heteroalkanetriyl;
wherein optionally the arenetriyl, heteroarenetriyl, alkanetriyl, or heteroalkanetriyl is substituted with a substituent selected from the group consisting of $C_{1-3}$ alkyl, COOH, C(O)H, and $C_{1-3}$ alkoxy;
wherein each X independently is $C_{1-4}$ alkylene, wherein optionally the alkylene is substituted with a substituent selected from the group consisting of COOH, C(O)H, and $C_{1-3}$ alkoxy;
and wherein the second monomer comprises at least two amines.

**2.** The method according to claim 1, wherein $R^2$ is benzenetriyl.

**3.** The method according to any one of the preceding claims, wherein the first monomer is 1,3,5-tris(bromomethyl)benzene.

**4.** The method according to any one of the preceding claims, wherein the second monomer is selected from the group consisting of piperazine, hexahydropyrimidine, pyrimidine, pyrazine, pyridazine, a compound according to Formula (2), a compound according to Formula (3), and a compound according to Formula (4);
wherein compounds according to Formula (2) are:

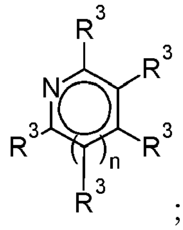;

wherein n is 0 or 1;
wherein each $R^3$ is independently selected from the group consisting of hydrogen, $R^4$-pyridyl, $R^4$-pyrrolyl, $R^4$-piperidinyl, $R^4$-pyrrolidinyl, $C_{1-3}$ alkyl, COOH, C(O)H, and $C_{1-3}$ alkoxy; wherein optionally $R^4$-pyridyl, $R^4$-pyrrolyl, $R^4$-piperidinyl, and/or $R^4$-pyrrolidinyl is substituted with a substituent selected from the group consisting of $C_{1-3}$ alkyl, COOH, C(O)H, and $C_{1-3}$ alkoxy;
wherein in Formula (2) at least one $R^3$ is $R^4$-pyridyl, $R^4$-pyrrolyl, $R^4$-piperidinyl, or $R^4$-pyrrolidinyl;
wherein each $R^4$ is independently selected from the group consisting of a bond, a $C_{1-6}$ alkylene, and phenylene;
wherein compounds according to Formula (3) are:

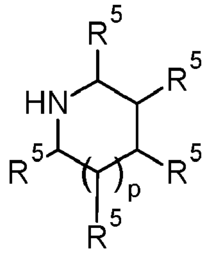

wherein p is 0 or 1;

wherein each $R^5$ is independently selected from the group consisting of hydrogen, $R^6$-piperidinyl, $R^6$-pyrrolidinyl, $C_{1-3}$ alkyl, COOH, C(O)H, and $C_{1-3}$ alkoxy; wherein optionally $R^6$-piperidinyl and/or $R^6$-pyrrolidinyl is substituted with a substituent selected from the group consisting of $C_{1-3}$ alkyl, COOH, C(O)H, and $C_{1-3}$ alkoxy;
wherein in Formula (3) at least one $R^5$ is $R^6$-piperidinyl or $R^6$-pyrrolidinyl;
wherein each $R^6$ is independently selected from the group consisting of a bond, a $C_{1-6}$ alkylene, and phenylene;
wherein compounds according to Formula (4) are:

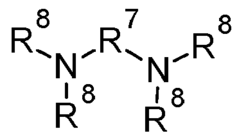
;

wherein $R^7$ is selected from the group consisting of phenylene, and $C_{1-8}$ alkylene, wherein optionally the phenylene or $C_{1-8}$ alkylene is substituted with a substituent selected from the group consisting of $C_{1-3}$ alkyl, COOH, C(O)H, and $C_{1-3}$ alkoxy;
wherein each $R^8$ is independently selected from the group consisting of hydrogen, $C_{1-8}$ alkyl, and $C_{5-7}$ aryl, wherein optionally $C_{1-8}$ alkyl and/or $C_{5-7}$ aryl is substituted with a substituent selected from the group consisting of $C_{1-3}$ alkyl, COOH, C(O)H, and $C_{1-3}$ alkoxy.

5. The method according to any one of the preceding claims, wherein the second monomer is selected from the group consisting of 4,4'-bipyridine, p-phenylenediamine, m-phenylenediamine, and o-phenylenediamine.

6. The method according to any one of the preceding claims, wherein the first solvent is selected from the group consisting of benzene, butanol, n-butyl acetate, carbon tetrachloride, chloroform, cyclohexane, 1,2-dichloroethane, dichloromethane, diethyl ether, diisopropyl ether, ethyl acetate, heptane, hexane, isooctane, methyl ethyl ketone, methyl tert-butyl ether, pentane, toluene, trichloroethylene, and xylene; preferably the first solvent is hexane.

7. The method according to any one of the preceding claims, wherein the second solvent is selected from the group consisting of water, acetic acid, acetonitrile, dimethylformamide, dimethyl sulfoxide, and methanol; preferably the second solvent is water.

8. The method according to any one of the preceding claims, wherein the interfacial polymerization reaction is carried out on a solid support, preferably the solid support is an ultrafiltration membrane, more preferably the solid support is selected from the group consisting of a polyethersulfone ultrafiltration membrane, a polyacrylonitrile ultrafiltration membrane, and a polybenzimidazole ultrafiltration membrane.

9. The method according to any one of the preceding claims, wherein the interfacial polymerization reaction is carried out at a temperature at which both the first solvent and the second solvent are liquid, preferably in a range of from 4 °C to 40 °C.

10. A membrane obtainable by the method according to any one of the preceding claims.

11. The membrane of claim 10, wherein the membrane has a thickness in a range of from 10 nm to 1000 nm, preferably in a range of from 400 nm to 700 nm.

12. The membrane according to any one of claims 10 and 11, wherein the membrane has a molecular weight cut-off in a range of from 100 Da to 100 kDa.

13. Use of the membrane according to any one of the claims 10 to 12 for water recycling.

14. Use of the membrane according to any one of the claims 10 to 12 for filtering organic solvents.

15. A polymer comprising a repeating unit according to Formula (5):

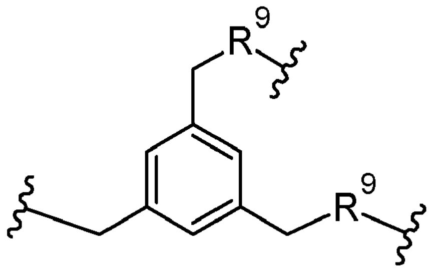

wherein each $R^9$ is individually selected from the group consisting of

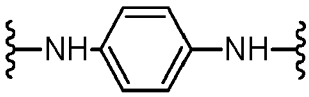, 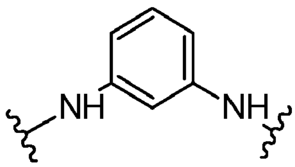, and 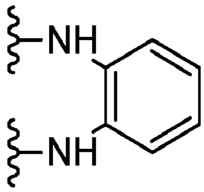.

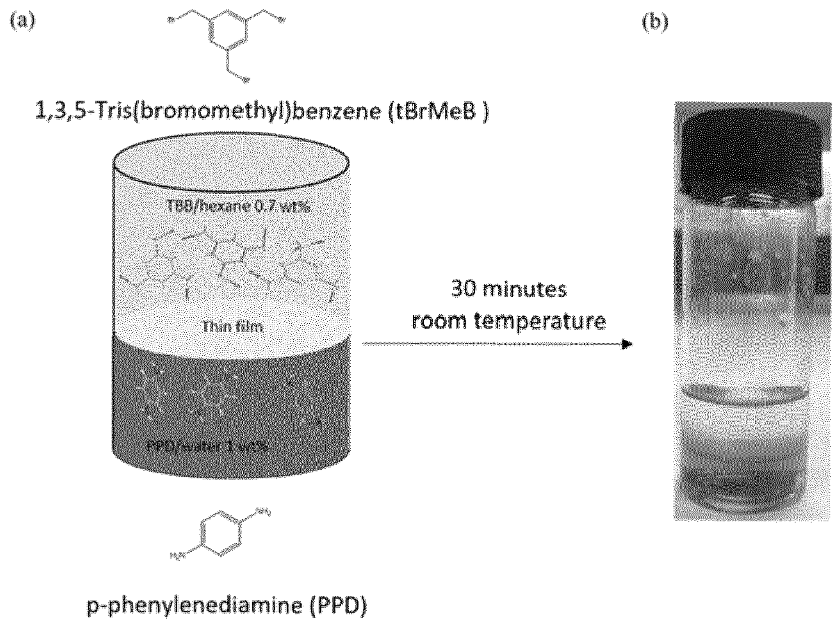
(a)
(b)
1,3,5-Tris(bromomethyl)benzene (tBrMeB )
TBB/hexane 0.7 wt%
Thin film
PPD/water 1 wt%
30 minutes
room temperature
p-phenylenediamine (PPD)

**FIGURE 1**

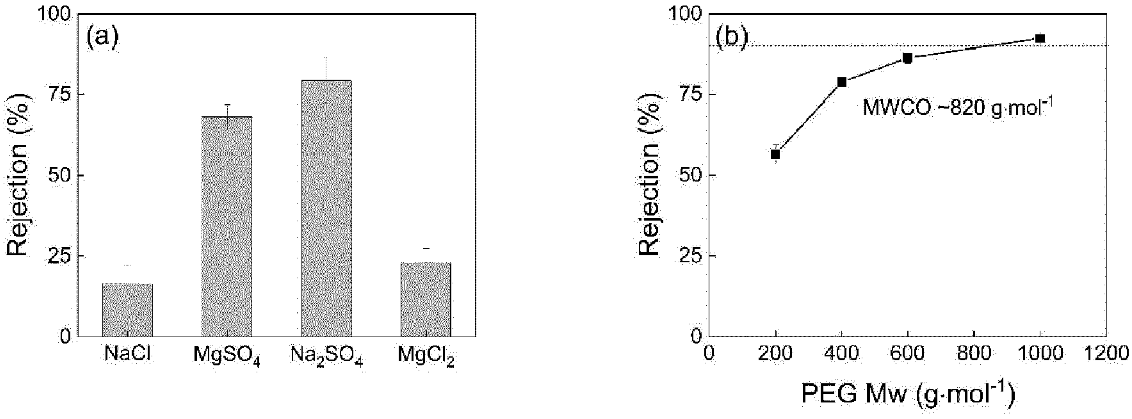
100
75
50
25
0
(a)
Rejection (%)
NaCl
$MgSO_4$
$Na_2SO_4$
$MgCl_2$
100
75
50
25
0
(b)
Rejection (%)
MWCO ~820 g·mol$^{-1}$
0
200
400
600
800
1000
1200
PEG Mw (g·mol$^{-1}$)

**FIGURE 2**

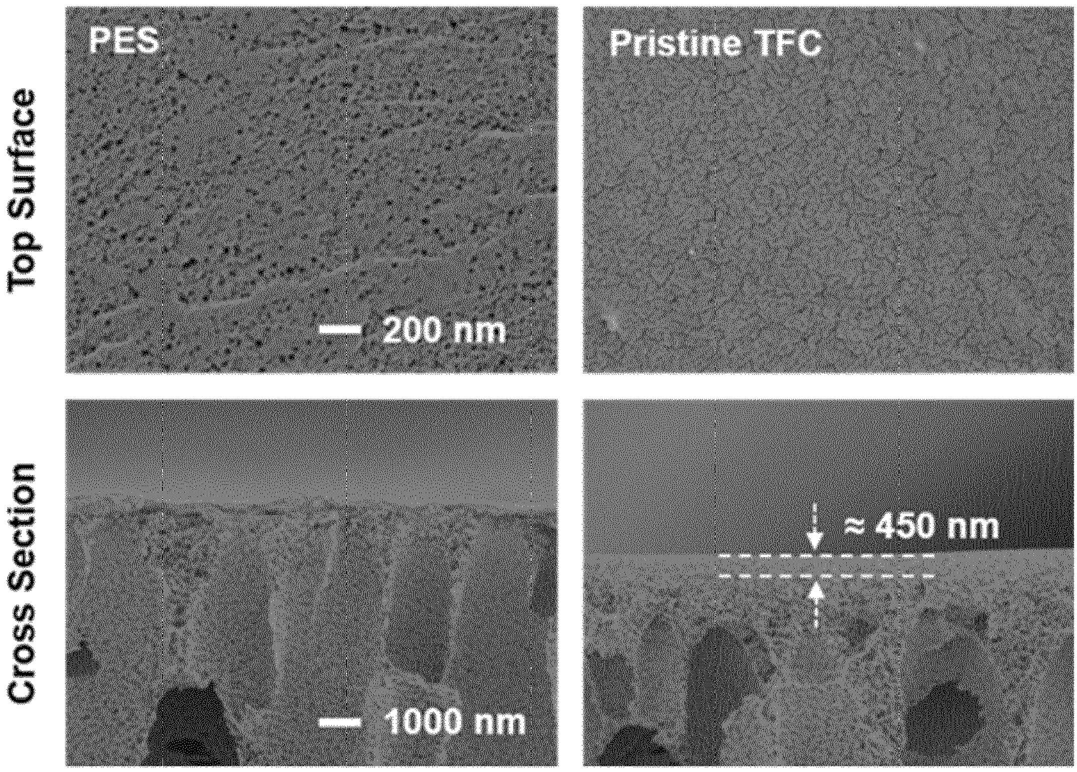
PES
Pristine TFC
Top Surface
Cross Section
200 nm
1000 nm
≈ 450 nm

FIGURE 3

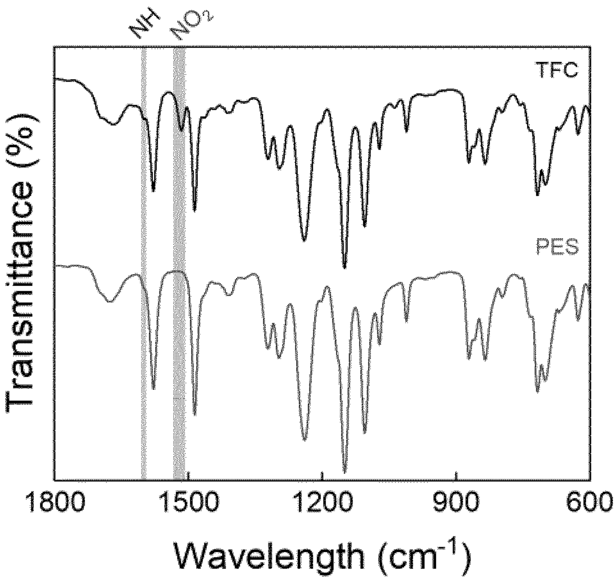
NH
$NO_2$
TFC
PES
Transmittance (%)
1800
1500
1200
900
600
Wavelength ($cm^{-1}$)

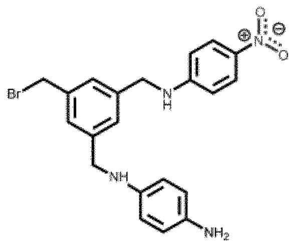

FIGURE 4

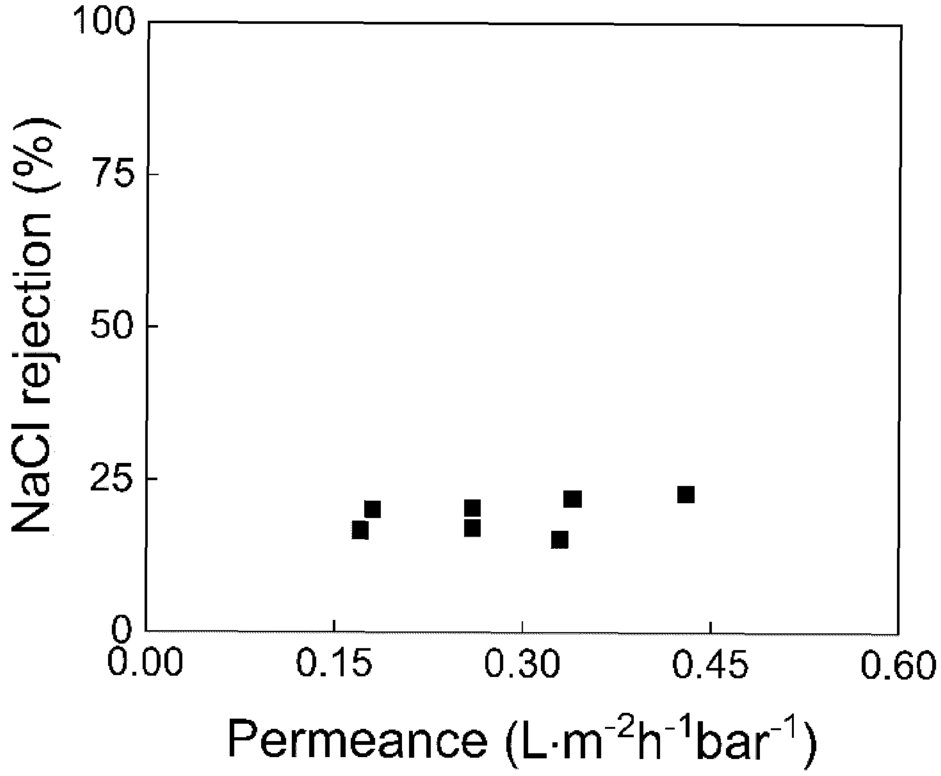
100
75
50
25
0
NaCl rejection (%)
0.00
0.15
0.30
0.45
0.60
Permeance (L·m-2h-1bar-1)

FIGURE 5

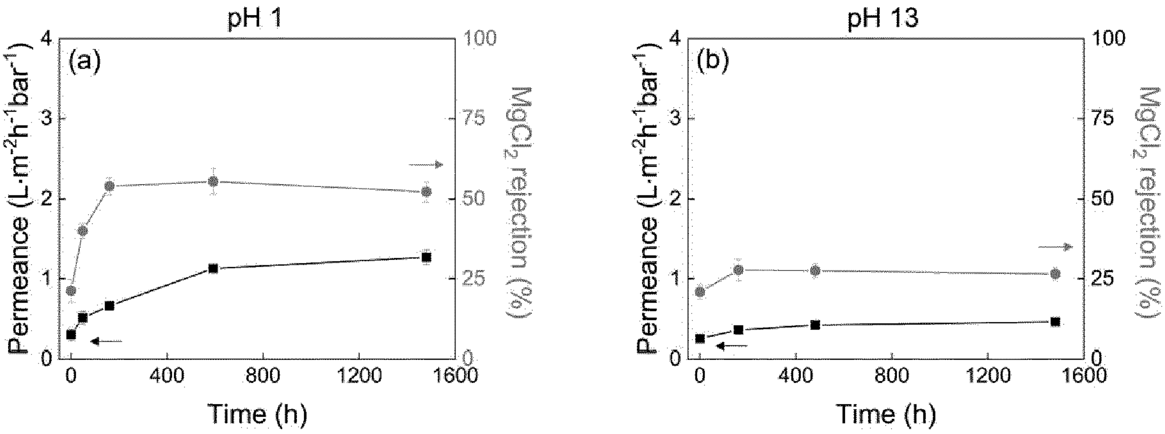
pH 1
(a)
Permeance (L·m-2h-1bar-1)
MgCl2 rejection (%)
Time (h)
0
1
2
3
4
25
50
75
100
400
800
1200
1600
pH 13
(b)

**FIGURE 6**

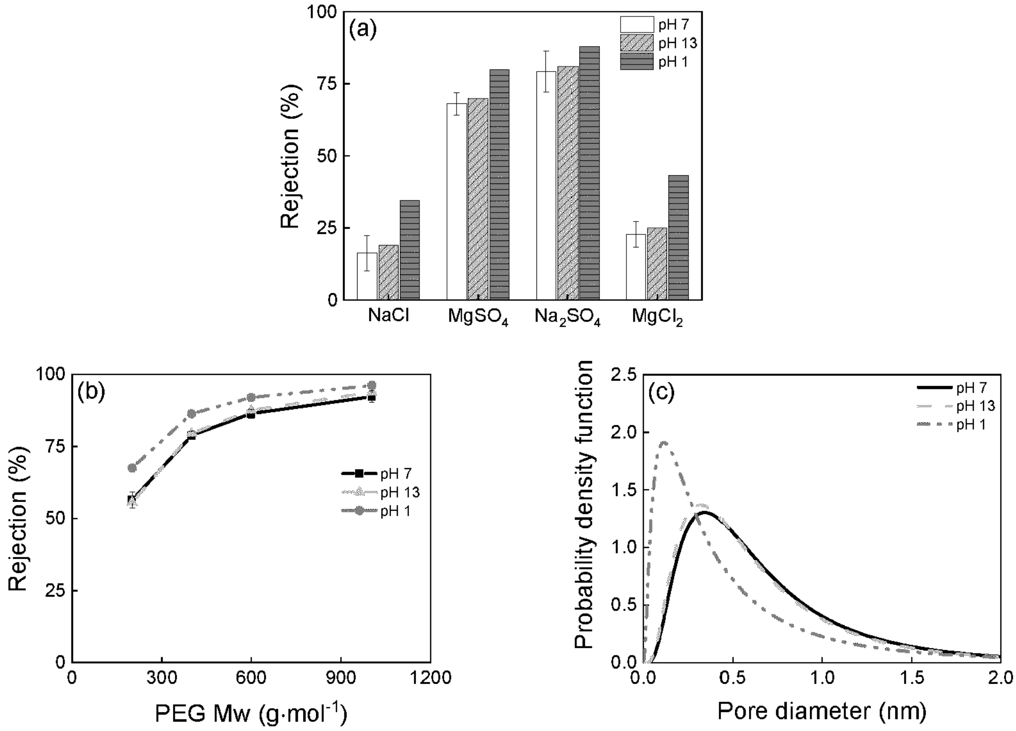
(a)
Rejection (%)
pH 7
pH 13
pH 1
NaCl
$MgSO_4$
$Na_2SO_4$
$MgCl_2$
(b)
Rejection (%)
PEG Mw ($g \cdot mol^{-1}$)
pH 7
pH 13
pH 1
(c)
Probability density function
Pore diameter (nm)
pH 7
pH 13
pH 1

**FIGURE 7**

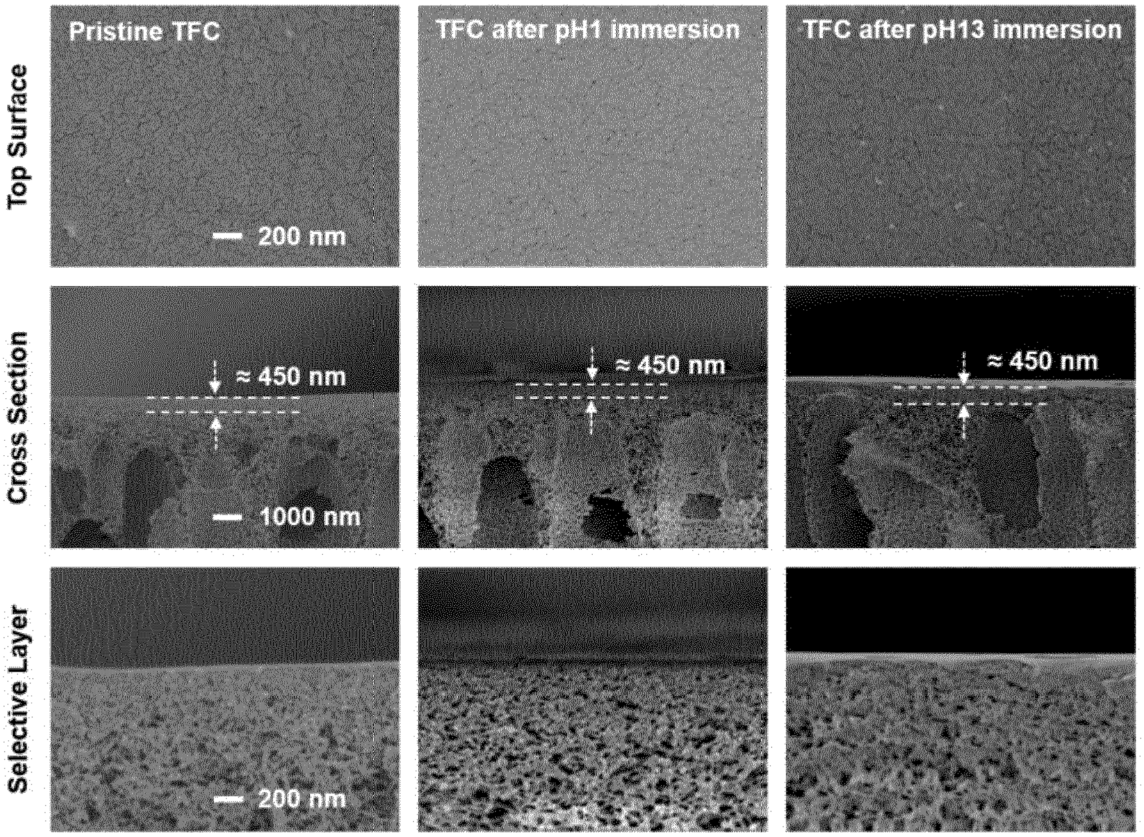
Pristine TFC
TFC after pH1 immersion
TFC after pH13 immersion
Top Surface
Cross Section
Selective Layer
200 nm
≈ 450 nm
≈ 450 nm
≈ 450 nm
1000 nm
200 nm

FIGURE 8

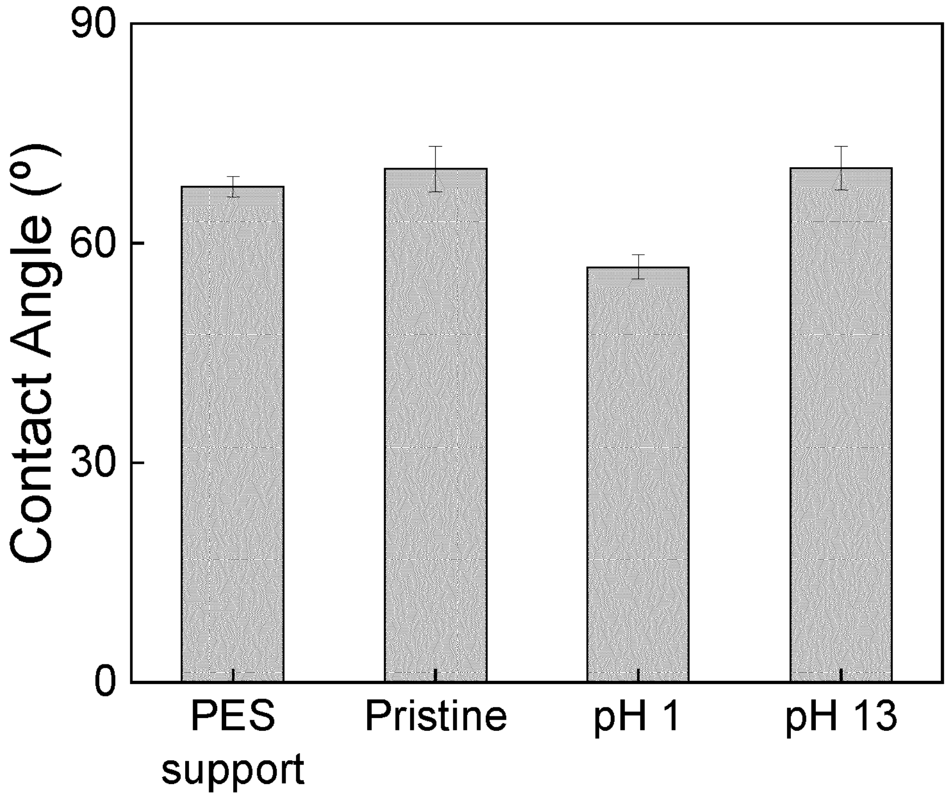


FIGURE 9

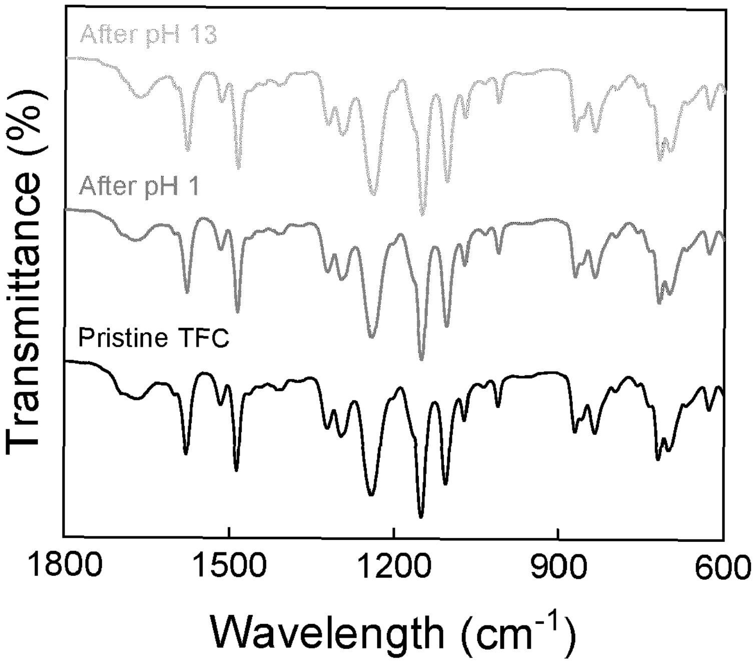
After pH 13
After pH 1
Pristine TFC
Transmittance (%)
1800
1500
1200
900
600
Wavelength (cm-1)

FIGURE 10

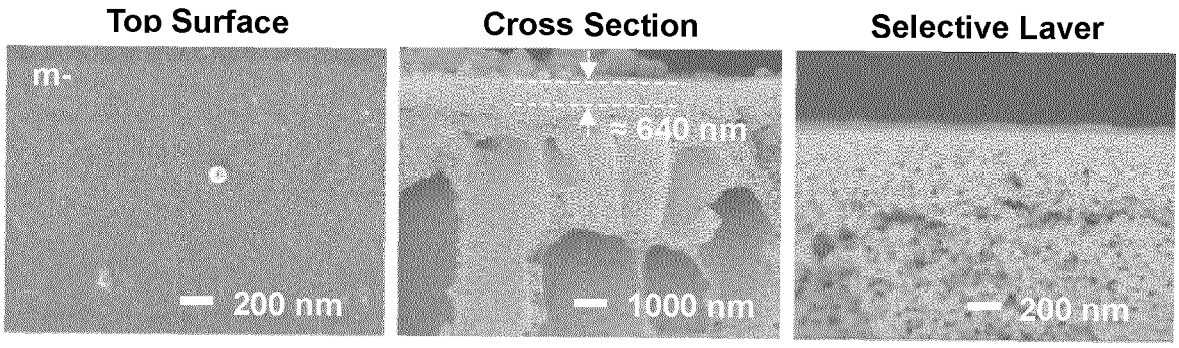
Top Surface
Cross Section
Selective Layer
m-
200 nm
≈ 640 nm
1000 nm
200 nm

FIGURE 11

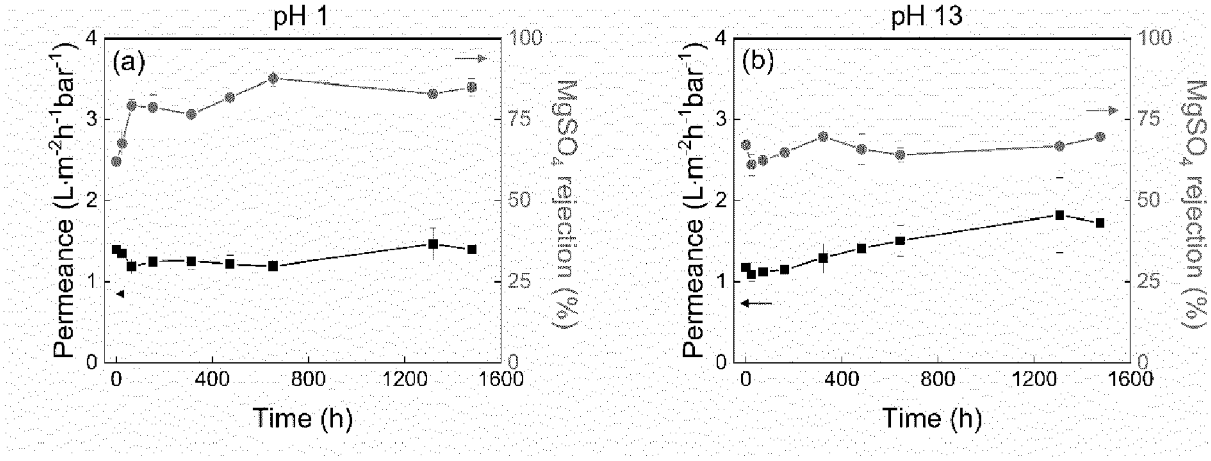
pH 1
(a)
Permeance (L·m-2h-1bar-1)
MgSO4 rejection (%)
Time (h)
0
400
800
1200
1600
0
1
2
3
4
0
25
50
75
100
pH 13
(b)

FIGURE 12

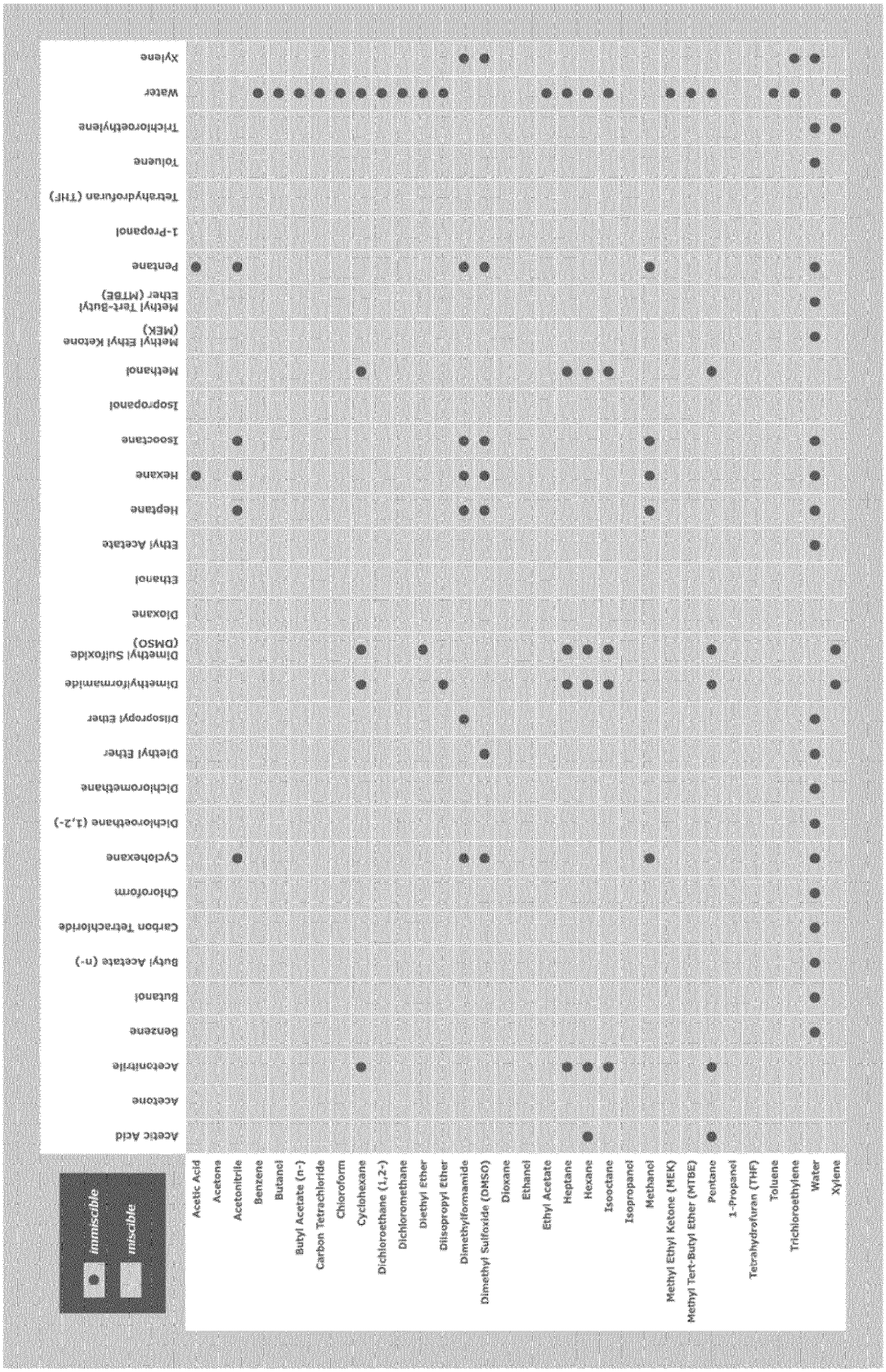
immiscible
miscible
Acetic Acid
Acetone
Acetonitrile
Benzene
Butanol
Butyl Acetate (n-)
Carbon Tetrachloride
Chloroform
Cyclohexane
Dichloroethane (1,2-)
Dichloromethane
Diethyl Ether
Diisopropyl Ether
Dimethylformamide
Dimethyl Sulfoxide (DMSO)
Dioxane
Ethanol
Ethyl Acetate
Heptane
Hexane
Isooctane
Isopropanol
Methanol
Methyl Ethyl Ketone (MEK)
Methyl Tert-Butyl Ether (MTBE)
Pentane
1-Propanol
Tetrahydrofuran (THF)
Toluene
Trichloroethylene
Water
Xylene

FIGURE 13

Europäisches Patentamt
European Patent Office
Office européen des brevets

# EUROPEAN SEARCH REPORT

Application Number
EP 21 15 6305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE KAH P ET AL: "Interfacial polymerization of cyanuric chloride and monomeric amines: pH resistant thin film composite polyamine nanofiltration membranes", JOURNAL OF MEMBRANE SCIENCE, ELSEVIER BV, NL, vol. 523, 10 October 2016 (2016-10-10), pages 487-496, XP029823514, ISSN: 0376-7388, DOI: 10.1016/J.MEMSCI.2016.10.012 * the whole document * ----- | 1-15 | INV. B01D61/02 B01D67/00 B01D69/02 B01D69/12 B01D71/60 |
| X | LEE KAH P. ET AL: "pH stable thin film composite polyamine nanofiltration membranes by interfacial polymerisation", JOURNAL OF MEMBRANE SCIENCE, vol. 478, 1 March 2015 (2015-03-01), pages 75-84, XP055828553, NL ISSN: 0376-7388, DOI: 10.1016/j.memsci.2014.12.045 * the whole document * ----- | 1-15 | TECHNICAL FIELDS SEARCHED (IPC): B01D |
| A | US 2002/063093 A1 (RICE WILLIAM C [US] ET AL) 30 May 2002 (2002-05-30) * paragraph [0052] * ----- | 1-15 | |
| A | Michiel J T Raaijmakers: "Hyper-Cross-Linked, hybrid Membranes via Interfacial Polymerization", 1 January 2015 (2015-01-01), Ipskamp Drukkers, Enschede, XP055664667, ISBN: 978-90-365-3967-8 DOI: 10.39990/1.9789036539678, * paragraph [0052] * ----- -/-- | 1-15 | |

The present search report has been drawn up for all claims

1

| Place of search | Date of completion of the search | Examiner |
|---|---|---|
| Munich | 28 July 2021 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 21 15 6305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG JINGSHUAI ET AL: "Fabrication of crosslinked polybenzimidazole membranes by trifunctional crosslinkers for high temperature proton exchange membrane fuel cells", INTERNATIONAL JOURNAL OF HYDROGEN ENERGY, ELSEVIER SCIENCE PUBLISHERS B.V., BARKING, GB, vol. 43, no. 6, 6 February 2018 (2018-02-06), pages 3299-3307, XP085350100, ISSN: 0360-3199, DOI: 10.1016/J.IJHYDENE.2017.12.141 * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 28 July 2021 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

page 2 of 2

## ANNEX TO THE EUROPEAN SEARCH REPORT ON EUROPEAN PATENT APPLICATION NO.

EP 21 15 6305

This annex lists the patent family members relating to the patent documents cited in the above-mentioned European search report. The members are as contained in the European Patent Office EDP file on
The European Patent Office is in no way liable for these particulars which are merely given for the purpose of information.

28-07-2021

| Patent document cited in search report | Publication date | Patent family member(s) | Publication date |
|---|---|---|---|
| US 2002063093 A1 | 30-05-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **VERBEKE et al.** *Environ. Sci. Technol.,* 2019, vol. 53, 8640-8648
- **K.H. YOUM ; W.S. KIM.** *J. Chem. Eng. Jpn.,* 1991, vol. 24, 1-7